# EUROPÄISCHE PATENTANMELDUNG

(11) **EP 4 086 057 A1**
(43) Veröffentlichungstag der Anmeldung: **09.11.2022**
(21) Anmeldenummer: 22168517.5
(22) Anmeldetag: 14.04.2022
(51) Int. Cl.: B28D 1/14, B28D 7/02, B23Q 11/00

(54) **ABSAUGADAPTER**

(30) Priorität: 06.05.2021 DE 102021204606
(71) Anmelder: Robert Bosch GmbH, 70442 Stuttgart (DE)
(72) Erfinder: Beckel, Daniel, 8005 Zürich (CH); Sonntag, Stefan, 88267 Vogt (DE); Widmann, Rainer, 88285 Bodnegg (DE); Schurig, Andreas, 3250 Lyss (CH); Okenwa, Edit, 4542 Luterbach (CH); Eckel, Daniel, 88364 Wolfegg (DE); Volz, Alexander, 88255 Baienfurt (DE); Gaschler, Tamara, 88212 Ravensburg (DE); Ionescu, Ioan, 4500 Solothurn (CH)

(57) **Zusammenfassung**

Die Erfindung betrifft einen Absaugadapter für ein Bohrwerkzeug, mit einem Gehäuse, wobei das Gehäuse eine Absaugvorrichtungsschnittstelle zur lösbaren Verbindung einer Absaugvorrichtung mit dem Absaugadapter aufweist, und mit einer Werkzeugverbindungseinheit zur axialen Fixierung des Absaugadapters auf dem Bohrwerkzeug. Es wird vorgeschlagen, dass das Gehäuse einen Verriegelungsmechanismus aufweist, wobei die Werkzeugverbindungseinheit über den Verriegelungsmechanismus am Gehäuse des Absaugadapters verriegelbar ist.

## Beschreibung

### Stand der Technik

In der DE 10 2019 205 656 A1 ist ein Bohrwerkzeug mit einem Transportkanal, der über ein Hülsenelement abgedeckt ist, beschrieben.

### Offenbarung der Erfindung

Die Erfindung betrifft insbesondere ein Bohrwerkzeug, insbesondere einen Gesteinsbohrer, das sich entlang einer Längsachse erstreckt, umfassend einen Bohrkopf, ein Einsteckende, einen Grundkörper, ein Abdeckelement und einen Transportbereich, der zwischen dem Bohrkopf und dem Einsteckende angeordnet ist, und zumindest einen Transportkanal, der sich entlang des Transportbereichs erstreckt, wobei der Transportkanal radial zwischen dem Abdeckelement und dem Grundkörper angeordnet ist, wobei das Abdeckelement vollständig außerhalb des Grundkörpers angeordnet ist und einen Spalt aufweist. Es wird vorgeschlagen, dass der Spalt des Abdeckelements im Querschnitt betrachtet einen Winkelbereich zwischen 30° und 270° einnimmt. Vorteilhaft kann dadurch eine sichere Verbindung zwischen dem Grundkörper und dem Abdeckelement realisiert werden.

Das Bohrwerkzeug ist insbesondere als ein Gesteinsbohrer ausgebildet, der für einen Bohrhammer vorgesehen ist. An seinem dem Bohrkopf abgewandten Ende weist das Bohrwerkzeug das Einsteckende auf, das zur Kopplung mit einer Handwerkzeugmaschine, wie beispielsweise einem Bohrhammer, ausgebildet ist. Vorzugsweise ist das Bohrwerkzeug im Bereich des Einsteckendes derart ausgebildet, dass das Bohrwerkzeug mit einer Werkzeugaufnahme der Handwerkzeugmaschine koppelbar ist. Beispielhaft kann das Bohrwerkzeug im Bereich des Einsteckendes als spezielle Nuten ausgebildete Formschlusselemente aufweisen, die eine SDS-plus-Schnittstelle oder eine SDS-max-Schnittstelle bilden. Zur Bearbeitung eines Werkstücks wird das Bohrwerkzeug mittels des Bohrhammers in einen rotierenden sowie linear oszillierenden bzw. schlagenden Zustand versetzt. Das Bohrwerkzeug dringt während der Bearbeitung in Vorschubrichtung des Bohrwerkzeugs in das Werkstück ein. Die Vorschubrichtung des Bohrwerkzeugs verläuft koaxial zu der Längsachse des Bohrwerkzeugs und ausgehend von dem Einsteckende in Richtung des Bohrkopfs. Die Längsachse des Bohrwerkzeugs entspricht insbesondere einer Arbeits- oder Rotationsachse des Bohrwerkzeugs.

Unter einem Bohrkopf soll in diesem Zusammenhang insbesondere ein Bereich des Bohrwerkzeugs verstanden werden, der zumindest einen Schneidkörper aufweist. Der Schneidkörper weist zumindest ein Schneidelement auf, das als ein Hauptschneidelement oder als ein Nebenschneidelement ausgebildet sein kann. Die Schneidelemente sind insbesondere aus einem Hartmetall ausgebildet. Vorzugsweise weisen die Schneidelemente eine höhere Härte als der Grundkörper auf. Jedes Schneidelement weist zumindest eine Schneidkante auf. Die Schneidkante entspricht der Schnittgeraden einer Spanfläche und einer Freifläche des Schneidelements. Vorzugsweise weist jedes Schneidelement eine einzelne Schneidkante auf. Alternativ kann das Schneidelement auch mehrere Schneidkanten aufweisen, die insbesondere ineinander übergehen. Insbesondere wird der Bereich des Bohrkopfs von dem zumindest einen Schneidkörper aufgespannt. Vorzugsweise weist der Schneidkörper zumindest zwei Schneidelemente, bevorzugt zumindest vier Schneidelemente, auf. Die Verbindung des Schneidkörpers mit dem Bohrwerkzeug erfolgt insbesondere über eine stoffschlüssige Verbindung. Vorzugsweise ist der Bohrkopf als ein Vollhartmetallkopf ausgebildet ist, wobei ein einzelner Schneidkörper mit zumindest einem Schneidelement über eine stumpfe Fläche mit dem Grundkörper bevorzugt über eine Schweißverbindung, verbunden ist. Alternativ ist auch denkbar, dass das Bohrwerkzeug Einschnitte aufweist, in die zumindest ein Schneidkörper in Form eines Hartmetallplättchens eingesetzt ist und insbesondere über eine Lötverbindung verbunden ist. Die Schweißverbindung unterscheidet sich in diesem Kontext von der Lötverbindung insbesondere dadurch, dass bei der Schweißverbindung ein teilweises Aufschmelzen der zu verbindenden Bauteile erfolgt.

Der Transportkanal ist insbesondere dazu ausgebildet, ein Fluid, vorzugsweise einen Luftstrom, innerhalb des Bohrwerkzeugs zu transportieren. Der Transportkanal ist bevorzugt zur Absaugung von Bohrklein innerhalb eines Bohrlochs während eines Bohrvorgangs vorgesehen. Das Bohrklein wird vorzugsweise entgegen der Vorschubrichtung des Bohrwerkzeugs transportiert. Der Transportkanal weist eine Ansaugöffnung und eine Absaugöffnung auf, deren Abstand der Länge des Transportkanals entspricht. Die Ansaugöffnung ist insbesondere im Bereich des Bohrkopfs, vorzugsweise unmittelbar hinter dem Bohrkopf angeordnet. Der Transportkanal kann exzentrisch oder konzentrisch ausgebildet sein. Unter einem exzentrischen bzw. konzentrischen Transportkanal soll insbesondere ein Transportkanal verstanden werden, der zu zumindest 70 % seiner Länge, vorzugsweise zu zumindest 90 % seiner Länge, bevorzugt im Wesentlichen vollständig entlang seiner Länge, exzentrisch bzw. konzentrisch zu der Längsachse des Bohrwerkzeugs verläuft. Über die Ansaugöffnung kann das Bohrklein in den Transportkanal eintreten. Vorzugsweise umfasst der Bohrkopf zumindest eine Ansaugöffnung. Die Ansaugöffnung und die Absaugöffnung können im Wesentlichen parallel zueinander, vorzugsweise im Wesentlichen senkrecht zueinander angeordnet sein.

Zudem weist das Bohrwerkzeug einen Anschlussbereich auf, der zur Verbindung des Bohrwerkzeugs mit einem Absaugadapter ausgebildet ist. Der Absaugadapter ist zur insbesondere lösbaren Verbindung des Bohrwerkzeugs mit einer Absaugvorrichtung vorgesehen.

Der Anschlussbereich weist insbesondere zumindest ein Anschlusselement auf, das dazu ausgebildet ist, das Bohrwerkzeug mit einem Absaugadapter zu verbinden. Vorzugsweise ist der Absaugadapter im verbundenen Zustand teilweise beweglich zu dem Bohrwerkzeug, insbesondere beweglich zu dem Grundkörper des Bohrwerkzeugs, ausgebildet. Insbesondere ist der Absaugadapter derart axial unbeweglich und drehbar verbunden, dass der Absaugadapter axial auf dem Bohrwerkzeug im Wesentlichen fixiert ist und das Bohrwerkzeug innerhalb des Absaugadapters rotieren kann. Insbesondere ist der Absaugadapter am Bohrwerkzeug mit Spiel fixiert. Die Absaugöffnung kann im Anschlussbereich angeordnet sein. Vorzugsweise ist der Transportkanal teilweise im Anschlussbereich angeordnet.

Der Grundkörper ist vorzugsweise stoffschlüssig mit dem Bohrkopf, insbesondere mit dem Schneidkörper, verbunden. Der Grundkörper kann derart ausgebildet sein, dass der Grundkörper die Längsachse des Bohrwerkzeugs im Transportbereich nicht schneidet. Der Grundkörper liegt insbesondere zumindest teilweise, vorzugsweise vollständig, axial an dem Bohrkopf bzw. an dem Schneidkörper an. Der Grundkörper ist insbesondere zur Übertragung eines Schlagimpulses von der Handwerkzeugmaschine auf den Bohrkopf ausgebildet. Der Grundkörper besteht aus einem metallischen Werkstoff, insbesondere aus einem Stahl. Der Grundkörper ist insbesondere drehfest mit dem Einsteckende gekoppelt. Der Grundkörper kann einstückig mit dem Einsteckenden ausgebildet sein.

Das Abdeckelement ist insbesondere dazu ausgebildet, den Transportkanal auf einer oder mehreren Seiten radial entlang seiner Erstreckung zu begrenzen. Das Abdeckelement kann im Querschnitt betrachtet beispielsweise gekrümmt, insbesondere kreisbogenförmig, ausgebildet sein. Alternativ oder zusätzlich kann das Abdeckelement auch eine oder mehrere ebene Flächen aufweisen, die einen rechteckigen Querschnitt aufweisen. Das Abdeckelement kann aus einem metallischen Werkstoff oder aus einem kunststoffhaltigen Werkstoff bestehen. Ist das Abdeckelement aus einem metallischen Werkstoff ausgebildet, kann das Abdeckelement insbesondere aus Edelstahl, vorzugsweise aus C5CRNi18-10, bestehen. Vorteilhaft kann dadurch eine gute Beständigkeit des Abdeckelements gegenüber Abrasion und Korrosion realisiert werden. Ist das Abdeckelement aus einem kunststoffhaltigen Werkstoff ausgebildet, kann das Abdeckelement aus einem thermoplastischen oder duroplastischen Kunststoff bestehen, beispielsweise Polyethylen, Polypropylen, Polyurethan, Polyethylenterephtalat, Polyamid, Acrylnitril-Butadien-Styrol, Polyetheretherketon, Polytetrafluorethylen, etc. Vorteilhaft weisen Abdeckelemente aus Kunststoff eine besonders hohe Korrosionsbeständigkeit insbesondere gegen Salze auf. Das Abdeckelement kann aus dem gleichen Werkstoff wie der Grundkörper ausgebildet sein.

Der Spalt des Abdeckelements ist zur Montage des Abdeckelements auf dem Grundkörpers vorgesehen. Vorteilhaft wird durch den Spalt eine seitlich Montage des Abdeckelements ermöglicht. Der Spalt des Abdeckelements erstreckt sich insbesondere entlang der gesamten Längserstreckung des Abdeckelements. Der Spalt ist vollständig außerhalb einer Hüllkurve des Grundkörpers angeordnet, sodass der Spalt eine Hüllkurve mit einem größeren Durchmesser aufweist als der Grundkörper. Der Winkelbereich, in welchem der Spalt angeordnet beziehungsweise über den die Größe des Spalts definiert ist, ist insbesondere auf einen Mittelpunktswinkel bezogen, bei dem die Längsachse des Bohrwerkzeugs den Mittelpunkt bildet.

Es wird vorgeschlagen, dass der Grundkörper eine Kerndicke aufweist und eine Breite des Spalts gleich der Kerndicke oder größer als die Kerndicke ausgebildet ist. Vorteilhaft kann dadurch eine sichere Montage ermöglicht werden. Unter einer Kerndicke soll im Zusammenhang dieser Anmeldung ein Durchmesser eines Kerndickenkreises bzw. eines größtmöglichen Innenkreises des Grundkörpers verstanden werden, der im Querschnitt betrachtet nicht in dem zumindest einen Transportkanal liegt. Die Breite des Spalts entspricht dabei dem Abstand der beiden Spaltenden.

Weiterhin wird vorgeschlagen, dass das Bohrwerkzeug einen einzelnen Transportkanal aufweist. Alternativ ist auch denkbar, dass das Bohrwerkzeug zwei oder mehr Transportkanäle aufweist. Die Transportkanäle können sich geradlinig und/oder parallel zu der Längsachse oder spiralförmig um die Längsachse erstrecken.

Zudem wird vorgeschlagen, dass der Transportkanal als eine konkave Nut in dem Grundkörper ausgebildet ist. Eine nach innen gerichtete Wölbung der Nut kann dabei entlang des Transportkanals im Wesentlichen konstant oder variierend ausgebildet sein. Alternativ ist auch denkbar, dass der Transportkanal als eine flache Nut in dem Grundkörper ausgebildet ist. Die flache Nut weist dabei einen im Wesentlichen ebenen Nutengrund auf, der keine Wölbung aufweist. Die flache Nut kann seitlich offen oder geschlossen ausgebildet sein.

Des Weiteren wird vorgeschlagen, dass das Bohrwerkzeug zumindest zwei Transportkanäle aufweist, wobei die Transportkanäle an einem Übergang ineinander übergehen. Der Übergang ist vorzugsweise in einem dem Bohrkopf zugewandten Bereich des Transportbereichs angeordnet. Vorteilhaft kann dadurch sichergestellt werden, dass der entstehende Bohrstaub vollständig aufgenommen wird. Alternativ ist auch denkbar, dass die Transportkanäle nicht ineinander übergehen und beabstandet zueinander verlaufen.

Weiterhin wird vorgeschlagen, dass das Bohrwerkzeug ein einzelnes Abdeckelement aufweist. Alternativ ist auch denkbar, dass das Bohrwerkzeug ein weiteres Abdeckelement aufweist, wobei das weitere Abdeckelement im Spalt des Abdeckelements angeordnet ist. Die Abdeckelemente weisen vorzugsweise die gleiche Größe auf.

Zudem wird vorgeschlagen, dass der Grundkörper einen Durchmesser aufweist, der kleiner als ein Durchmesser des Einsteckendes ist. Alternativ ist auch denkbar, dass der Durchmesser des Grundkörpers größer als der Durchmesser des Einsteckendes ist.

Weiterhin wird vorgeschlagen, dass zwischen dem Transportbereich und dem Einsteckende das Anschlusselement zur Verbindung des Bohrwerkzeugs mit einem Absaugadapter angeordnet ist. Das Anschlusselement ist vorzugsweise rotationsymmetrisch, insbesondere als eine umlaufende Nut oder Erhebung, ausgebildet.

Zudem wird vorgeschlagen, dass das Abdeckelement und der Grundkörper stoffschlüssig miteinander verbunden sind. Die stoffschlüssige Verbindung kann beispielsweise über eine Lötverbindung oder eine Schweißverbindung erfolgen. Alternativ ist auch denkbar, dass das Abdeckelement und der Grundkörper kraft- und/oder formschlüssig miteinander verbunden sind, beispielsweise über eine Rastverbindung mittels eines Clips.

Des Weiteren wird vorgeschlagen, dass der Grundkörper einen mehreckigen, insbesondere einen dreieckigen Querschnitt oder einen sechseckigen Querschnitt aufweist.

Zudem betrifft die Erfindung insbesondere ein Herstellungsverfahren für ein Bohrwerkzeug das sich entlang einer Längsachse erstreckt, umfassend einen Bohrkopf, ein Einsteckende, einen Grundkörper, ein Abdeckelement und einen Transportbereich, der zwischen dem Bohrkopf und dem Einsteckende angeordnet ist, und zumindest einen Transportkanal, der sich entlang des Transportbereichs erstreckt, wobei der Transportkanal radial zwischen dem Abdeckelement und dem Grundkörper angeordnet ist. Es wird vorgeschlagen, dass ein Härtevorgang des Grundkörpers und ein Verlöten des Grundkörpers mit dem Abdeckelement im gleichen Verfahrensschritt durchgeführt werden. Vorteilhaft kann dadurch die Dauer des Herstellungsverfahrens verkürzt werden. Insbesondere erfolgt sowohl das Härten des Grundkörpers als auch das Verlöten im im Wesentlichen gleichen Zeitraum in einem Härteofen.

Die Erfindung betrifft insbesondere einen Absaugadapter für ein Bohrwerkzeug, mit einem Gehäuse, wobei das Gehäuse eine Absaugvorrichtungsschnittstelle zur lösbaren Verbindung einer Absaugvorrichtung mit dem Absaugadapter aufweist, und mit einer Werkzeugverbindungseinheit zur axialen Fixierung des Absaugadapters auf dem Bohrwerkzeug. Es wird vorgeschlagen, dass die Werkzeugverbindungseinheit derart ausgebildet ist, dass die Werkzeugverbindungseinheit mit einem ersten Adapterelement, das für kleine Bohrwerkzeuge vorgesehen ist, oder alternativ mit einem zweiten Adapterelement, das für große Bohrwerkzeuge vorgesehen ist, verbindbar ist. Vorteilhaft kann dadurch der Absaugadapter mit unterschiedlichen Bohrwerkzeugen verwendet werden.

Das Gehäuse und die Absaugvorrichtungsschnittstelle sind insbesondere einteilig oder einstückig miteinander ausgebildet. Unter einstückig soll im Zusammenhang dieser Anmeldung ein Bauteil verstanden werden, das aus einem Stück ausgebildet und nicht aus mehreren Bauteilen, die stoffschlüssig und/oder kraft- und/oder formschlüssig miteinander verbunden sind, ausgebildet ist. Ein einstückiges Bauteil besteht demnach aus einem einzigen Material. Unter einteilig soll im Zusammenhang dieser Anmeldung insbesondere ein Bauteil aus mehreren Bauteile, die stoffschlüssig miteinander verbunden sind, verstanden werden. Das Gehäuse ist vorzugsweise aus einem Kunststoff, insbesondere aus einem Hartplastik-Kunststoff, ausgebildet.

Die Absaugvorrichtung kann beispielsweise als ein Staubsauger, insbesondere als ein Industriestaubsauger, ausgebildet sein. Es ist ebenso denkbar, dass die Absaugvorrichtung als ein Zubehör für eine Handwerkzeugmaschine ausgebildet und lösbar mit der Handwerkzeugmaschine, insbesondere einem Gehäuse oder Handgriff der Handwerkzeugmaschine, verbindbar ist. Staubabsaugungen für Handwerkzeugmaschinen können eine eigene Antriebseinheit, die über die Handwerkzeugmaschine oder einen Handwerkzeugmaschinenakkupack mit Energie versorgt werden, aufweisen. Die Absaugvorrichtungsschnittstelle des Absaugadapters ist vorzugsweise als Standart- Absaugvorrichtungsschnittstelle ausgebildet, sodass die Absaugvorrichtungsschnittstelle mit unterschiedlichen Absaugvorrichtungen von unterschiedlichen Herstellern verbindbar ist.

Unter einem kleinen Bohrwerkzeug soll in diesem Zusammenhang ein Bohrwerkzeug verstanden werden, dessen Grundkörper einen kleineren Durchmesser als das Einsteckende aufweist. Unter einem großen Bohrwerkzeug soll in diesem Zusammenhang ein Bohrwerkzeug verstanden werden, dessen Grundkörper einen größeren Durchmesser als das Einsteckende aufweist.

Das erste und das zweite Adapterelement sind lösbar mit dem Gehäuse der Absaugvorrichtung ausgebildet. Im verbundenen Zustand sind die Adapterelemente vorzugsweise drehfest mit dem Gehäuse des Absaugadapters verbunden.

Des Weiteren wird vorgeschlagen, dass die Werkzeugverbindungseinheit einen Verbindungskörper mit einer Werkzeugschnittstelle zur lösbaren Verbindung mit dem Bohrwerkzeug und eine Gehäuseschnittstelle zur lösbaren Verbindung mit dem Gehäuse des Absaugadapters aufweist. Unter einer lösbaren Verbindung soll in diesem Zusammenhang eine werkzeuglos lösbare Verbindung verstanden werden. Die Werkzeugschnittstelle und die Gehäuseschnittstelle sind insbesondere auf unterschiedlichen Seiten des Verbindungskörpers angeordnet. Die Werkzeugschnittstelle ist auf einer innenliegenden Seite, die dem Bohrwerkzeug zugewandt ist, angeordnet. Zudem sind die Werkzeugschnittstelle und die Gehäuseschnittstelle vorzugsweise auf unterschiedlichen Enden des Verbindungskörpers angeordnet. Die Gehäuseschnittstelle und die Werkzeugschnittstelle sind vorzugsweise rotationssymmetrisch ausgebildet.

Weiterhin wird vorgeschlagen, dass der Verbindungskörper im Bereich der Werkzeugschnittstelle derart elastisch ausgebildet ist, dass die Werkzeugschnittstelle zur Herstellung einer Verbindung mit dem Bohrwerkzeug spreizbar ist. Vorteilhaft ermöglicht diese eine einfach Montage, bei der der Verbindungskörper in der Endposition einschappt. Die Werkzeugschnittstelle ist insbesondere derart elastisch ausgebildet, dass ein Innendurchmesser des Verbindungskörpers im Bereich der Werkzeugschnittstelle beispielsweise händisch um zumindest 5%, bevorzugt um zumindest 10%, vergrößert werden kann.

Zudem wird vorgeschlagen, dass der Absaugadapter zumindest ein Formschlusselement zur axialen Fixierung aufweist, wobei das Formschlusselement insbesondere aus einem metallischen Werkstoff ausgebildet ist. Das Formschlusselement korrespondiert insbesondere zu dem Anschlusselement des Bohrwerkzeugs. Das Formschlusselement kann beispielsweise eine Kugelform oder eine Stab- bzw. Stiftform aufweisen. Das Formschlusselement kann einteilig oder einstückig mit dem Verbindungskörper ausgebildet sein. Das Formschlusselement kann auch kraft- und/oder formschlüssig mit dem Verbindungskörper verbunden sein.

Des Weiteren wird vorgeschlagen, dass die Gehäuseschnittstelle eine außenliegende umlaufende Nut aufweist, die zu einem Verriegelungsmechanismus des Gehäuses korrespondiert. Vorteilhaft kann dadurch die Werkzeugverbindungseinheit lösbar mit dem Gehäuse verbunden werden. Die Nut der Gehäuseschnittstelle ist insbesondere im Verbindungskörper angeordnet.

Weiterhin wird vorgeschlagen, dass der Verbindungskörper eine Adapteröffnung aufweist, in der das erste Adapterelement oder alternativ das zweite Adapterelement aufnehmbar ist. Vorteilhaft kann dadurch der gleiche Verbindungskörper mit unterschiedlichen Adapterelementen verbunden werden. Die Adapteröffnung weist zumindest ein Adapterverbindungselement auf, das zur kraft- und/oder formschlüssigen Verbindung des Verbindungskörpers mit zumindest einem der Adapterelemente ausgebildet ist

Zudem wird vorgeschlagen, dass der Verbindungskörper mit dem ersten Adapterelement kraft- und/oder formschlüssig, insbesondere lösbar, verbunden ist. Vorteilhaft kann dadurch der Verbindungskörper mit unterschiedlichen ersten Adapterelementen verbunden werden.

Des Weiteren wird vorgeschlagen, dass das erste Adapterelement ein Blendenelement aufweist, das die Adapteröffnung im verbundenen Zustand teilweise verdeckt. Das Blendenelement kann verstellbar, insbesondere als eine Irisblende, oder nicht verstellbar ausgebildet sein. Insbesondere weist das erste Adapterelement eine Bohrwerkzeugdurchführung aufweist, die koaxial zu der Adapteröffnung angeordnet ist und einen kleineren Durchmesser als die Adapteröffnung aufweist. Die Bohrwerkzeugdurchführung weist insbesondere einen Durchmesser auf, der größer als ein Bohrkopfdurchmesser und kleiner als der Durchmesser des Einsteckendes ausgebildet ist.

Zudem wird vorgeschlagen, dass das zweite Adapterelement ein Hülsenelement aufweist, das zur Abdeckung eines Transportkanals des Bohrwerkzeugs ausgebildet ist. Das Hülsenelement entspricht dabei im Wesentlichen einem Abdeckelement mit einem kreisringförmigen Querschnitt ohne Spalt. Das Hülsenelement kann aus den gleichen Materialien ausgebildet sein, wie das zuvor beschriebene Abdeckelement.

Das Hülsenelement weist eine Länge auf, die im Wesentlichen der Länge des Transportbereichs des Bohrwerkzeugs entspricht.

Des Weiteren wird vorgeschlagen, dass zweite Adapterelement, insbesondere das Hülsenelement, stoffschlüssig mit dem Verbindungskörper verbunden ist. Insbesondere ist das Hülsenelement über einen Größenausgleichring mit dem Verbindungskörper stoffschlüssig verbunden ist. Vorteilhaft kann dadurch eine stabile stoffschlüssige Verbindung realisiert werden.

Weiterhin betrifft die Erfindung insbesondere ein System aufweisend ein kleines Bohrwerkzeug mit einem Absaugadapter mit einem ersten Adapterelement und ein großes Bohrwerkzeug mit einem Absaugadapter mit einem zweiten Adapterelement. Es wird vorgeschlagen, dass sich die Absaugadapter nur durch das Adapterelement unterscheiden. Vorteilhaft kann dadurch ein flexibel einsetzbares System bereitgestellt werden.

Die Erfindung betrifft einen Absaugadapter für ein Bohrwerkzeug, mit einem Gehäuse, wobei das Gehäuse eine Absaugvorrichtungsschnittstelle zur lösbaren Verbindung einer Absaugvorrichtung mit dem Absaugadapter aufweist, und mit einer Werkzeugverbindungseinheit zur axialen Fixierung des Absaugadapters auf dem Bohrwerkzeug. Es wird vorgeschlagen, dass das Gehäuse einen Verriegelungsmechanismus aufweist, wobei die Werkzeugverbindungseinheit über den Verriegelungsmechanismus am Gehäuse des Absaugadapters verriegelbar ist. Vorteilhaft kann dadurch eine lösbare und sichere Verbindung der Werkzeugverbindungseinheit mit dem Gehäuse des Absaugadapters realisiert werden. Der Verriegelungsmechanismus ist insbesondere manuell betätigbar und werkzeuglos lösbar ausgebildet.

Des Weiteren wird vorgeschlagen, dass der Verriegelungsmechanismus ein Betätigungselement aufweist, das über ein Rückstellelement mit einer Kraft beaufschlagt ist. Das Betätigungselement kann beispielsweise über eine translatorische Bewegung und/oder einer rotatorischen Bewegung betätigbar ausgebildet sein. Das Betätigungselement kann beispielsweise als ein Knopf, eine Taste, ein Hebel oder dergleichen ausgebildet sein. Das Betätigungselement ist beweglich mit dem Gehäuse des Absaugadapters verbunden.

Weiterhin wird vorgeschlagen, dass das Betätigungselement als eine Betätigungshülse ausgebildet ist. Das Betätigungselement ist vorzugsweise einteilig oder einstückig ausgebildet. Insbesondere ist das Betätigungselement relativ zu einem Hauptkörper des Gehäuses linear beweglich gelagert. Die Betätigungshülse umschließt den Hauptkörper dabei zumindest bereichsweise vollständig.

Zudem wird vorgeschlagen, dass die Absaugvorrichtungsschnittstelle als ein Absaugstutzen ausgebildet ist. Vorteilhaft kann dadurch die Absaugvorrichtungsschnittstelle mit unterschiedlichen Absaugvorrichtungen verbunden werden. Der Absaugstutzen ist zur kraft- und/oder formschlüssigen Verbindung mit der Absaugvorrichtung, insbesondere einem Saugschlauch der Absaugvorrichtung, ausgebildet.

Des Weiteren wird vorgeschlagen, dass das Betätigungselement derart angeordnet ist, dass die Absaugvorrichtungsschnittstelle, insbesondere der Absaugstutzen, zur Unterstützung der Betätigungsbewegung durch den Benutzer umgreifbar ausgebildet ist. Vorteilhaft kann dadurch ein ergonomischer Absaugadapter bereitgestellt werden. Der Absaugadapter ist insbesondere derart ausgebildet, dass die Betätigungsbewegung des Betätigungselements kreuzend, insbesondere im Wesentlichen senkrecht, zu einer Verbindungsrichtung der Absaugvorrichtungsschnittstelle, über die die Absaugvorrichtungsschnittstelle mit der Absaugvorrichtung verbunden wird, angeordnet ist.

Weiterhin wird vorgeschlagen, dass der Verriegelungsmechanismus zumindest ein, insbesondere zumindest zwei, vorzugsweise zumindest drei, Rastelemente aufweist. Die Rastelemente sind insbesondere als Rastkugeln ausgebildet. Die Rastelemente sind beweglich im Gehäuse des Absaugadapters angeordnet. Die Rastelemente können aus einem metallischen Werkstoff oder aus Kunststoff bestehen.

Die Erfindung betrifft ferner ein Bohrwerkzeug mit einem Absaugadapter wie zuvor beschrieben.

Die Erfindung betrifft ferner ein System aufweisend ein Bohrwerkzeug mit einem Absaugadapter wie zuvor beschrieben und einer Handwerkzeugmaschine mit einer Werkzeugaufnahme, wobei die Werkzeugaufnahme einen Verriegelungsmechanismus aufweist, der dem Verriegelungsmechanismus des Absaugadapters im Wesentlichen entspricht. Vorteilhaft kann dadurch der Absaugadapter intuitiv von dem Benutzer verwendet werden.

Des Weiteren wird vorgeschlagen, dass der Verriegelungsmechanismus des Absaugadapters und der Verriegelungsmechanismus der Handwerkzeugmaschine im Wesentlichen die gleiche Betätigungsrichtung aufweisen und die jeweilige Verriegelung über Rastkugeln erfolgt.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Bezugszeichen von Merkmalen unterschiedlicher Ausführungsformen der Erfindung, die sich im Wesentlichen entsprechen, werden mit derselben Zahl und mit einem die Ausführungsform kennzeichnenden Buchstaben versehen.

Es zeigen:
Fig. 1a eine Seitenansicht eines System bestehend aus einer Handwerkzeugmaschine mit einem Bohrwerkzeug, das über einen Absaugadapter mit einer Absaugvorrichtung verbunden ist;
Fig. 1b eine perspektivische Ansicht eines Bohrwerkzeugs mit einem Absaugadapter;
Fig. 1c einen Längsschnitt des Bohrwerkzeugs mit dem Absaugadapter;
Fig. 1d eine perspektivische Ansicht des Bohrwerkzeugs ohne Abdeckelement;
Fig. 1e eine Draufsicht auf das Bohrwerkzeug gemäß Fig. 1b;
Fig. 1f ein Querschnitt durch das Bohrwerkzeug gemäß Fig. 1b;
Fig. 1g ein Flussdiagramm eines Herstellungsverfahrens für das Bohrwerkzeug gemäß Fig. 1b;
Fig. 1h eine Explosionsansicht einer Werkzeugverbindungseinheit des Absaugadapters gemäß Fig. 1b;
Fig. 1i eine Explosionsansicht eines Gehäuses des Absaugadapters gemäß Fig. 1b;
Fig. 1j eine perspektivische Ansicht eines großen Bohrwerkzeugs mit dem Absaugadapter;
Fig. 1k eine Seitenansicht des Bohrwerkzeugs gemäß Fig. 1j;
Fig. 1l eine Explosionsansicht einer Werkzeugverbindungseinheit des Absaugadapters für das Bohrwerkzeug gemäß Fig. 1j;
Fig. 1m einen Längsschnitt des Bohrwerkzeugs gemäß Fig. 1j mit dem Absaugadapter;
Fig. 1n einen Längsschnitt durch eine Anbohrkappe im mit dem Bohrwerkzeug gemäß Fig. 1j verbundenen Zustand;
Fig. 2 - 15a alternative Ausführungsformen eines Bohrwerkzeugs mit zumindest einem Abdeckelement im Querschnitt;
Fig. 15b eine perspektivische Ansicht eines Grundkörper des Bohrwerkzeugs gemäß Fig. 15a;
Fig. 16 - 17 weitere alternative Ausführungsformen eines Bohrwerkzeugs mit zwei Abdeckelementen im Querschnitt;

### Beschreibung der Ausführungsbeispiele

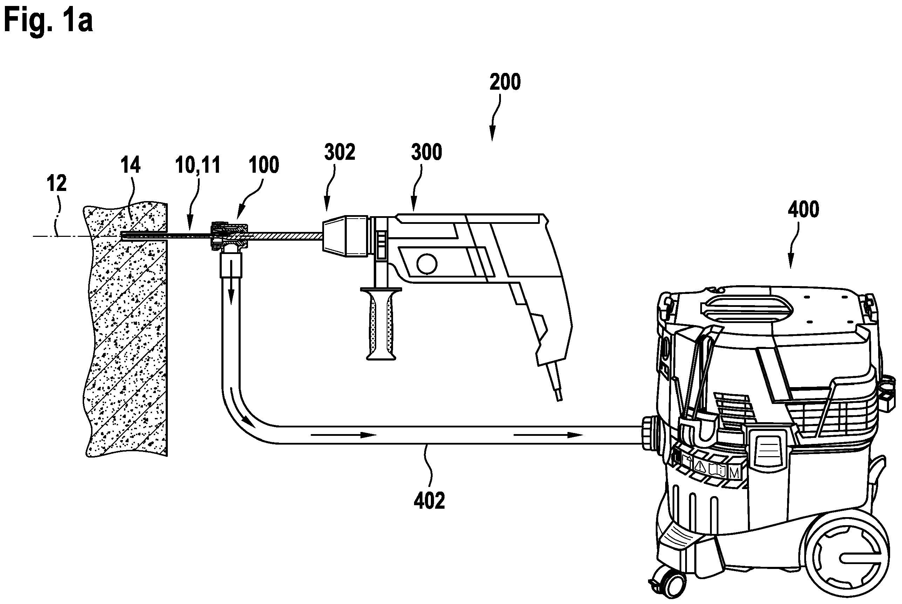

In Fig. 1a ist eine schematische Ansicht eines Werkzeugsystems gezeigt. Das Werkzeugsystem umfasst ein Bohrwerkzeug 10, eine Handwerkzeugmaschine 300 und eine Absaugvorrichtung 400. Die Handwerkzeugmaschine 300 ist beispielhaft als ein Bohrhammer ausgebildet. Die Handwerkzeugmaschine 300 weist eine Werkzeugaufnahme 302 auf, die zur Aufnahme eines als Bohrwerkzeug 10 ausgebildeten Einsatzwerkzeugs ausgebildet ist. Die Handwerkzeugmaschine 300 weist eine nicht dargestellte einen Elektromotor umfassende Antriebseinheit und ein ein pneumatisches Schlagwerk umfassendes Getriebe auf. Über die Antriebseinheit und das Getriebe kann das Bohrwerkzeug 10 im gekoppelten Zustand rotatorisch um eine Längsachse 12 des Bohrwerkzeugs 10 und linear oszillierend bzw. schlagend entlang der Längsachse 12 angetrieben werden.

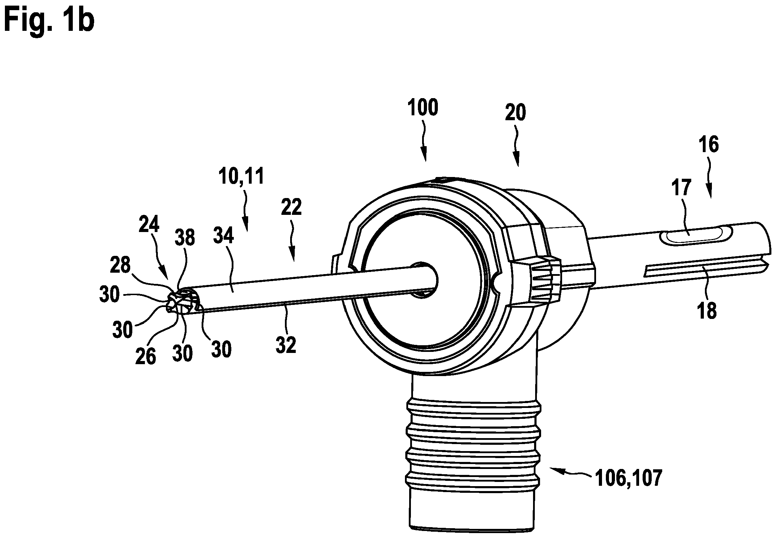

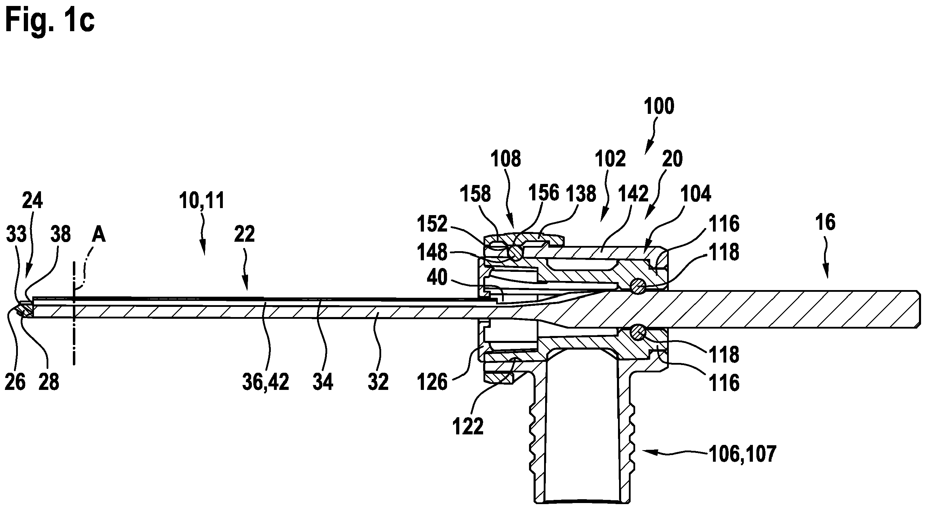

Das Bohrwerkzeug 10 ist als ein Gesteinsbohrer ausgebildet und in Fig. 1b in einer vergrößerten perspektivischen Darstellung gezeigt. Das Bohrwerkzeug 10 ist insbesondere als ein Saugbohrer ausgebildet, über den während des Bohrvorgangs innerhalb des Bohrlochs Staub und Bohrklein absaugbar ist. Zudem ist das Bohrwerkzeug 10 in Fig. 1c in einem Längsschnitt gezeigt. Das Bohrwerkzeug 10 ist insbesondere dazu vorgesehen, ein Bohrloch in einem Werkstück 14, das beispielhaft als ein Gemäuer ausgebildet ist, zu erzeugen. Das Bohrloch wird über eine schlagende Bewegung des Bohrwerkzeugs 10 entlang der Längsachse 12 und eine rotatorische Bewegung des Bohrwerkzeugs 10 um die Längsachse 12 erzeugt. Das Bohrwerkzeug 10 weist ein Einsteckende 16 auf, das zur Kopplung des Bohrwerkzeugs 10 mit der Handwerkzeugmaschine 300 ausgebildet ist. Das Einsteckende 16 des Bohrwerkzeugs 10 weist beispielhaft einen größeren Durchmesser als der Bohrkopf 24 auf. Das Bohrwerkzeug 10 ist somit als ein kleines Bohrwerkzeug 11 ausgebildet.

Das Einsteckende 16 ist beispielhaft als eine SDS-plus Schnittstelle ausgebildet. Das Einsteckende 16 weist zwei erste Formschlusselemente 17 und zwei zweite Formschlusselemente 18 zur Verbindung mit der Werkzeugaufnahme 302 der Handwerkzeugmaschine 300 auf. Die ersten Formschlusselemente 17 sind als axial geschlossene Nuten ausgebildet, in die im verbundenen Zustand nicht dargestellte als Rastkugeln ausgebildete Rastelemente der Werkzeugaufnahme 302 zur axialen Fixierung des Bohrwerkzeugs 10 in der Handwerkzeugmaschine 300 eingreifen. Die Verbindung ist über eine nicht dargestellte Betätigungshülse der Werkzeugaufnahme 302 lösbar, wobei die zum Lösen der Verbindung erforderliche Betätigungsbewegung entlang der Längsachse 12 des Bohrwerkzeugs 10 und entgegen der Vorschubrichtung erfolgt. Die zweiten Formschlusselemente 18 sind als offene Nuten ausgebildet, die zur Führung vorgesehen sind.

Ausgehend von dem Einsteckende 16 weist das Bohrwerkzeug 10 entlang seiner Längserstreckung einen Anschlussbereich 20 zur Verbindung des Bohrwerkzeugs 10 mit einem Absaugadapter 100, einen Transportbereich 22 und einen Bohrkopf 24 auf. Das vordere Ende des Bohrwerkzeugs 10 wird von dem Bohrkopf 24 und das hintere Ende des Bohrwerkzeugs 10 wird von dem Einsteckende 16 gebildet.

Der Absaugadapter 100 ist über einen Saugschlauch 402 mit der beispielhaft als Industriesauger ausgebildeten Absaugvorrichtung 400 verbunden.

Der Absaugadapter 100 ist mehrteilig ausgebildet und weist ein Gehäuse 102 und eine Werkzeugverbindungseinheit 104 zur axialen Fixierung des Absaugadapters 100 auf dem Bohrwerkzeug 10 auf. Das Gehäuse 102 umfasst eine Absaugvorrichtungsschnittstelle 106 zur lösbaren Verbindung mit der Absaugvorrichtung 400 auf. Die Absaugvorrichtungsschnittstelle 106 ist beispielhaft als ein Absaugstutzen 107 ausgebildet. Der Absaugstutzen 107 weist beispielhaft eine konusförmige Innenseite zur Verbindung mit dem Saugschlauch 402 auf. Das Gehäuse 102 und die Werkzeugverbindungseinheit 104 sind werkzeuglos lösbar miteinander über einen Verriegelungsmechanismus 108 verbunden. Der Absaugadapter 100 und das Bohrwerkzeug 10 sind relativ zueinander drehbar verbunden.

Der Bohrkopf 24 weist einen einzelnen Schneidkörper 28 in Form eines Vollhartmetallkopfs auf. Der Schneidkörper 28 ist auf einer stirnseitigen stumpfen Fläche 33 eines Grundkörpers 32 des Bohrwerkzeugs 10 aufgesetzt und mit diesem verschweißt. Der Schneidkörper 28 umfasst beispielhaft vier Schneidelemente 30, insbesondere zwei Hauptschneidelemente und zwei Nebenschneidelemente. Der Schneidkörper 28 ist einstückig ausgebildet. Der Bohrkopf 24 weist eine als Zentrierspitze ausgebildete Spitze 26 auf, die derart stirnseitig hervorsteht, dass sie als erstes in Kontakt mit dem Werkstück 14 kommt. Das Bohrwerkzeug 10 weist im Transportbereich 22 einen Grundkörper 32 und ein Abdeckelement 34 auf. Radial zwischen dem Grundkörper 32 und dem Abdeckelement 34 ist ein Transportkanal 36 zum Abtransport von Bohrklein aus dem Bohrloch angeordnet. Das Abdeckelement 34 ist unbeweglich und drehfest mit dem Grundkörper 32 verbunden. Das Abdeckelement 34 ist vollständig außerhalb des Grundkörpers 32 angeordnet.

Der Transportkanal 36 erstreckt sich entlang der Längsachse 12 vollständig durch den Transportbereich 22. Der Transportkanal 36 weist eine Ansaugöffnung 38, über die Bohrklein während der Erzeugung des Bohrlochs in den Transportkanal 36 eintritt, und eine Absaugöffnung 40, über die das Bohrklein den Transportkanal 36 verlässt, auf. Die Absaugöffnung 40 ist dabei innerhalb des Absaugadapters 100 angeordnet. Das Bohrwerkzeug 10 weist beispielhaft einen einzelnen Transportkanal 36 auf. Es wäre allerdings ebenso denkbar, dass das Bohrwerkzeug 10 mehrere Transportkanäle aufweist.

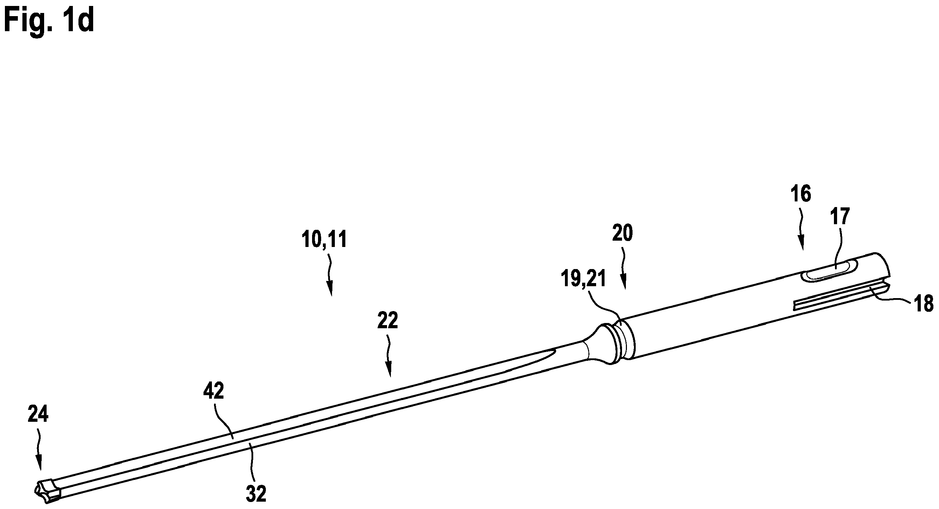

In Fig. 1d ist das Bohrwerkzeug 10 ohne das Abdeckelement 34 in einer perspektivischen Ansicht gezeigt. Der Grundkörper 32 des Bohrwerkzeugs 10 weist eine außenliegende Nut 42 auf, die sich geradlinig und parallel zu der Längsachse 12 durch den Transportbereich 22 erstreckt. Alternative wäre ebenfalls denkbar, dass die einzelne außenliegende Nut 42 sich spiralförmig um die Längsachse 12 durch den Transportbereich 22 erstreckt. Die Nut 42 ist an ihrem dem Bohrkopf 24 zugewandten Ende axial offen ausgebildet, an ihrem dem Bohrkopf 24 abgewandten Ende ist die Nut 42 axial geschlossen und radial nach außen sich öffnend ausgebildet.

Der Anschlussbereich 20 zwischen dem Transportbereich 22 und dem Einsteckende 16 weist ein Anschlusselement 19 auf, das zur Verbindung des Bohrwerkzeugs 10, insbesondere des Grundkörpers 32 des Bohrwerkzeugs 10, mit dem Absaugadapter 100 ausgebildet ist. Das Anschlusselement 19 ist beispielhaft rotationssymmetrisch ausgebildet. Das Anschlusselement 19 ist beispielhaft als eine umlaufende Nut 21 ausgebildet. Der Anschlussbereich 20 weist einen Durchmesser auf, der im Wesentlichen dem Durchmesser des Einsteckendes 16 entspricht. Dabei weist der Anschlussbereich 20 auch im Nutengrund des Anschlusselements 19 einen größeren Durchmesser als der Transportbereich 22 im Bereich des Transportkanals 36 auf.

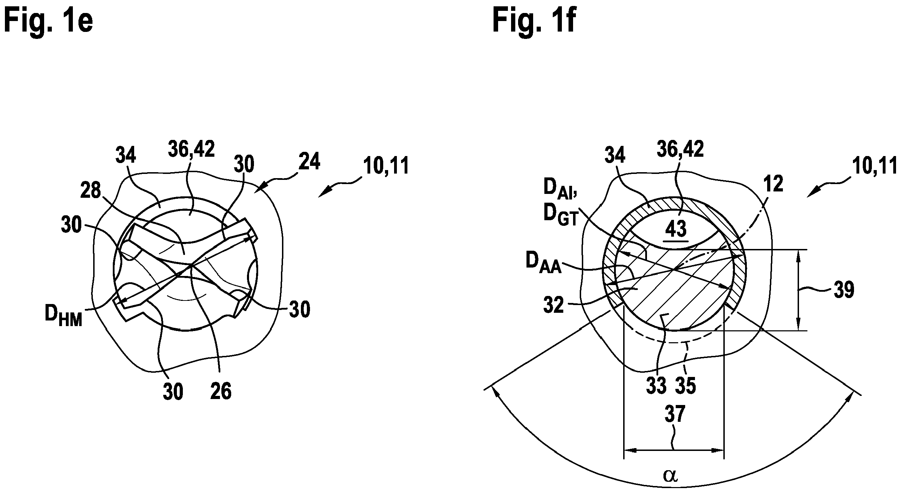

In Fig. 1e ist das Bohrwerkzeug 10 in einer Draufsicht gezeigt. In Fig. 1f ist ein Querschnitt A (siehe Fig. lc) durch das Bohrwerkzeug 10 gezeigt. Das Abdeckelement 34 ist beispielhaft kreisbogenförmig ausgebildet.

Die Nut 42 im Grundkörper 32 ist beispielhaft als eine konkave Nut ausgebildet. Radial wird die Nut 42 im Transportbereich 22 durch das Abdeckelement 34 derart abgeschlossen, dass der Transportkanal 36 im Transportbereich 22 in Umfangsrichtung geschlossen ist.

Der Schneidkörper 28 ist derart geformt, dass eine Fügefläche des Schneidkörpers 28 zu der stirnseitigen stumpfen Fläche 33 des Grundkörpers 32, an der der Schneidkörper 28 anliegt, korrespondiert. Der Schneidkörper 28 weist einen Durchmesser D_{HM} auf, der im Wesentlichen der resultierenden Bohrlochgröße entspricht.

Der Grundkörper 32 weist im Transportbereich 22 einen Durchmesser D_{GT} auf. Der Durchmesser D_{HM} des Bohrkopfs 24 ist dabei größer als der Durchmesser D_{GT} des Grundkörpers 32 ausgebildet. Das Abdeckelement 34 ist vollständig außerhalb des Grundkörpers 32 angeordnet und weist einen Spalt 35 auf.

Das Abdeckelement 34 weist einen Innendurchmesser D_{AI} und einen Außendurchmesser D_{AA} auf. Die Differenz zwischen dem Außendurchmesser D_{AA} und dem Innendurchmesser D_{AI} entspricht dabei einer Dicke des Abdeckelements 34. Der Innendurchmesser D_{AI} entspricht im Wesentlichen dem Durchmesser D_{GT} des Grundkörpers 32. Die Dicke des Abdeckelements 34 ist derart ausgebildet, dass der Außendurchmesser D_{AA} des Abdeckelements 34 kleiner als der Durchmesser D_{HM} des Bohrkopfs 24 ist. Vorteilhaft wird dadurch eine Luftzuführspalt gebildet. Insbesondere entspricht die Dicke des Abdeckelements 34 zumindest 50%, vorzugsweise zumindest 75%, bevorzugt zumindest 90%, der Differenz des Durchmessers D_{HM} des Bohrkopfs 24 und des Durchmesser D_{GT} des Grundkörpers 32 im Transportbereich 22.

Das Abdeckelement 34 ist durch den Spalt 35 in Umfangsrichtung offen ausgebildet. Das Abdeckelement 34 ist fest mit dem Grundkörper 32 verbunden, beispielhaft über einen Stoffschluss in Form einer Lötverbindung. Das Abdeckelement 34 ist derart geformt, dass eine Querschnittsfläche 43 des Transportkanals 36 im Transportbereich 22 im Wesentlichen konstant ausgebildet ist. Mit anderen Worten weist das Profil des Transportkanals 36 eine im Wesentlichen gerade Skelettlinie auf. Insbesondere ist die Skelettlinie im Wesentlichen entlang des gesamten Transportkanals 36 vorzugsweise zwischen der Ansaugöffnung 38 und der Absaugöffnung 40, im Wesentlichen geradlinig ausgebildet.

Durch den Spalt 35 wird eine Montage des Abdeckelements 34 auf dem Grundkörper 32 nachdem dieser mit dem Schneidkörper 28 verbunden wurde ermöglicht.

Der Spalt 35 nimmt im Querschnitt betrachtet einen Winkelbereich von ca. 110° ein, wobei der Winkelbereich auf einen Mittelpunktswinkel α bezogen ist. Der Bezugspunkt für den Mittelpunktswinkel α ist die Längsachse 12. Zudem weist der Spalt 35 eine Breite 37 auf, die größer als eine Kerndicke 39 des Grundkörpers 32 im Transportbereich 22 ist. Die Kerndicke 39 ist beispielhaft im Wesentlichen konstant ausgebildet. Es ist allerdings auch denkbar, dass sich die Kerndicke entlang der Längsachse 12 ändert.

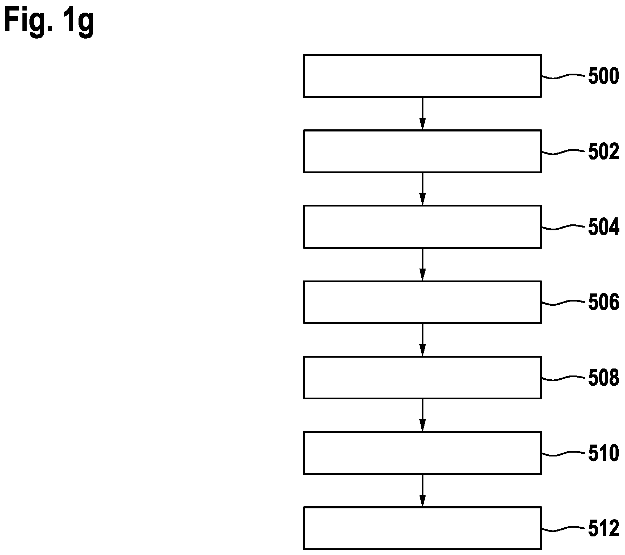

In Fig. 1g ist ein Herstellungsverfahren für das kleine Bohrwerkzeug 11 wie zuvor beschrieben in einem Flussdiagramm dargestellt.

In einem ersten Verfahrensschritt 500 wird der Grundkörper 32 mit dem Einsteckende 16 aus einem Metallrohling, insbesondere einem Stahlrohling, bereitgestellt.

In einem zweiten Verfahrensschritt 502 wird der Transportbereich 22 durch Fräsen einer geradlinigen Nut 42 im Grundkörper 32 hergestellt.

In einem dritten Verfahrensschritt 504 wird mittels eines Drehverfahrens das Anschlusselement 19 in Form der umlaufenden Nut 21, und somit der Anschlussbereich 20, hergestellt.

In einem vierten Verfahrensschritt 506 wird der Schneidkörper 28 in Form eines Vollhartmetallkopfs auf der stirnseitig stumpfen Fläche 33 des Grundkörpers 32 mit diesem verschweißt.

In einem fünften Verfahrensschritt 508 wird das Abdeckelement 34 seitlich auf dem Grundkörper 32 im Transportbereich 22 zur Abdeckung des Transportkanals 36 montiert.

Im sechsten Verfahrensschritt 510 wird eine Lötfolie oder eine Lötpaste im Übergangsbereich zwischen dem Grundkörper 32 und dem Abdeckelement 34 platziert.

In einem siebten Verfahrensschritt 512 wird das Bohrwerkzeug 10 in einem Härteofen sowohl ausgehärtet als auch das Abdeckelement 34 auf dem Grundkörper 32 verlötet.

Die Verbindung des Bohrwerkzeugs 10 mit dem Absaugadapter 100 erfolgt über einen zweistufigen Prozess.

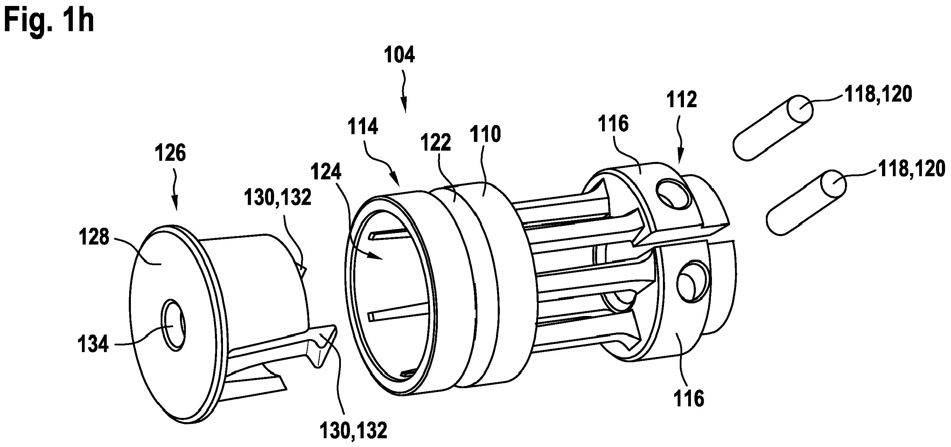

In einem ersten Montageverfahrensschritt wird das Bohrwerkzeug 10 mit der Werkzeugverbindungseinheit 104 des Absaugadapters 100 verbunden. Die Werkzeugverbindungseinheit 104 ist in Fig. 1h in einer perspektivischen Explosionsansicht gezeigt.

Die Werkzeugverbindungseinheit 104 weist einen Verbindungskörper 110 auf. Der Verbindungskörper 110 umfasst eine Werkzeugschnittstelle 112 zur lösbaren Verbindung mit dem Bohrwerkzeug 10 und eine Gehäuseschnittstelle 114 zur lösbaren Verbindung mit dem Gehäuse 102 des Absaugadapters 100. Der Verbindungskörper 110 ist beispielhaft einstückig und aus einem Kunststoff, insbesondere einem Hartplastik-Kunststoff, ausgebildet.

Die Werkzeugschnittstelle 112 und die Gehäuseschnittstelle 114 sind entlang der Längsachse 12 des Bohrwerkzeugs 10 betrachtet an unterschiedlichen Enden des Verbindungskörpers 110 angeordnet. Im Bereich der Werkzeugschnittstelle 112 ist der Verbindungskörper 110 flexibel und im Bereich der Gehäuseschnittstelle 114 im Wesentlichen starr ausgebildet In diesem Zusammenhang soll unter flexibel im Gegensatz zu starr verstanden werden, dass ein Durchmesser des Verbindungskörpers 110 im Bereich der Werkzeugschnittstelle 112 durch von einem Benutzer ausgeübten Druck vergrößerbar oder verkleinerbar ist. Im Bereich der Gehäuseschnittstelle 114 ist dies nicht möglich.

Die Werkzeugschnittstelle 112 besteht beispielhaft aus zwei relativ zueinander beweglichen Armen 116, die über die Gehäuseschnittstelle 114 miteinander verbunden sind. Die Werkzeugschnittstelle 112 weist zudem zwei Formschlusselemente 118 zur axialen Fixierung auf. Die Formschlusselemente 118 sind beispielhaft als metallische Stifte 120 ausgebildet, die in korrespondierende zylindrische Bohrungen des Verbindungskörpers 110 eingreifen. Die Werkzeugschnittstelle 112 weist beispielhaft je Arm 116 ein Formschlusselement 118 auf. Die Formschlusselemente 118 sind derart angeordnet, dass sie im mit dem Bohrwerkzeug 10 verbundenen Zustand formschlüssig in das Anschlusselement 19 des Grundkörpers 32 eingreifen und somit den Verbindungskörper drehbeweglich axial fixieren.

Die Gehäuseschnittstelle 114 weist eine außenliegende umlaufende Nut 122 auf. Zudem weist der Verbindungskörper 110 im Bereich der Gehäuseschnittstelle 114 eine Adapteröffnung 124 zur Verbindung mit einem ersten Adapterelement 126 auf.

Das erste Adapterelement 126 ist beispielhaft einstückig und aus einem Hartplastik-Kunststoff ausgebildet. Das erste Adapterelement 126 umfasst ein Blendenelement 128 und zwei Rastelemente 130. Die Rastelemente 130 sind beispielhaft in Form von Rasthaken 132 ausgebildet und zur kraft- und formschlüssigen Verbindung des Adapterelements 126 mit dem Verbindungskörper 110 vorgesehen. Die Verbindung erfolgt dabei beispielhaft drehfest.

Das Blendenelement 128 ist dazu ausgebildet, die Adapteröffnung 124 im verbundenen Zustand abzudecken. Das Blendenelement 128 deckt die Adapteröffnung 124 dabei im Wesentlichen vollständig bis auf eine Bohrwerkzeugdurchführung 134 ab. Die Bohrwerkzeugdurchführung 134 ist im Blendenelement 128 des ersten Adapterelements 126 angeordnet. Die Bohrwerkzeugdurchführung 134 ist dabei an die Größe des Bohrkopfs 24 des Bohrwerkzeugs angepasst.

Zur Montage werden die Arme 116 der Werkzeugschnittstelle 112 gespreizt und im Anschluss wird die Werkzeugverbindungseinheit 104 mit der Werkzeugschnittstelle 112 voraus über den Bohrkopf 24 auf das Bohrwerkzeug 10 aufgeschoben. Ist die Werkzeugschnittstelle 112 im Bereich des Anschlusselements 19 angeordnet, rasten die Formschlusselemente 118 in das Anschlusselement 19 des Grundkörpers 32 ein.

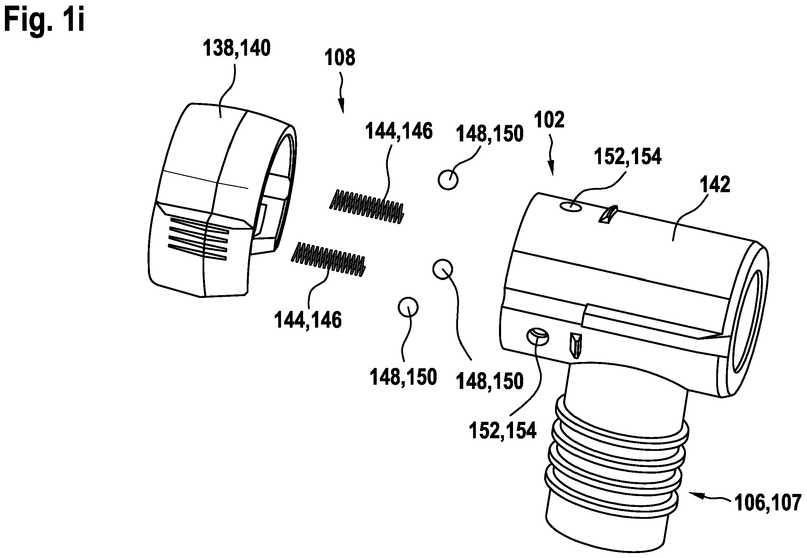

In einem zweiten Montageverfahrensschritt wird das Gehäuse 102 des Absaugadapters 100 montiert. In Fig. 1i ist das Gehäuse 102 des Absaugadapters 100 in einer perspektivischen Explosionsansicht gezeigt.

Die Montage des Gehäuses 102 des Absaugadapters 100 mit der Werkzeugverbindungseinheit 104 erfolgt über eine Betätigung des Verriegelungsmechanismus 108. Der Verriegelungsmechanismus 108 umschließt im montierten Zustand die Werkzeugverbindungseinheit 104 und das Bohrwerkzeug 10.

Der Verriegelungsmechanismus 108 umfasst ein Betätigungselement 138 in Form einer Betätigungshülse 140. Das Betätigungselement 138 ist linear beweglich mit einem Hauptkörper 142 des Gehäuses 102 des Absaugadapters 100 verbunden. Das Betätigungselement 138 und der Hauptkörper 142 sind beispielhaft einstückig und aus einem Hartplastik-Kunststoff, insbesondere dem gleichen Kunststoff, ausgebildet.

Das Betätigungselement 138 ist beispielhaft mittels zwei Rückstellelementen 144 in seine Verriegelungsposition mit einer Kraft beauflagt. Die Rückstellelemente 144 sind beispielhaft als Spiralfedern 146 ausgebildet.

Zudem umfasst der Verriegelungsmechanismus 108 beispielhaft drei Verriegelungselemente 148. Die Verriegelungselemente 148 sind beispielhaft als Rastkugeln 150 ausgebildet. Die Rastkugeln 150 sind beispielhaft aus einem Metall ausgebildet.

Der Hauptkörper 142 des Gehäuses 102 umfasst die Absaugvorrichtungsschnittstelle 106 in Form des Absaugstutzens 107. Zudem umfasst der Hauptkörper 142 je Verriegelungselement 148 eine Verriegelungselementaufnahme 152. Die Verriegelungselementaufnahmen 152 sind beispielhaft als konische Bohrungen 154 ausgebildet, die auf einer dem Bohrwerkzeug 10 zugewandten Seite eine kleinere Öffnung aufweist. Die Verriegelungselemente 148 werden von außen in die Verriegelungselementaufnahmen 152 eingesetzt und zwischen dem Hauptkörper 142 und dem Betätigungselement 138 gehalten.

Das Betätigungselement 138 weist auf seiner Innenseite Halteelemente 156 und Freigabeelemente 158 auf (siehe Fig. 1c), die entlang der Längsachse 12 des Bohrwerkzeugs 10 hintereinander angeordnet sind. Das Betätigungselement 138 ist beispielhaft einstückig ausgebildet und die Halteelemente 156 und die Freigabeelemente 158 sind an das Betätigungselement 138 angeformt.

Das Halteelement 156 ist als eine Durchmesserreduzierung ausgebildet und im verriegelten Zustand über den Verriegelungselementen 148 angeordnet. Im montierten und verriegelten Zustand werden die Verriegelungselemente 148 mittels des Halteelements 156 derart in den Verriegelungselementaufnahmen 152 gehalten, dass die Verriegelungselemente 148 teilweise im Innenraum des Hauptkörpers 142 angeordnet sind und in die umlaufende Nut 122 der Gehäuseschnittstelle 114 der Werkzeugverbindungseinheit 104 eingreifen. Somit wird dadurch das Gehäuse 102 drehbeweglich auf der Werkzeugverbindungseinheit 104 fixiert.

Das Freigabeelement 158 ist mit Bezug auf das Halteelement 156 als eine Durchmessererweiterung ausgebildet. Die Betätigung des Betätigungselements 138 erfolgt über eine Relativbewegung des Betätigungselements 138 entgegen der Vorschubrichtung des Bohrwerkzeugs 10. Im entriegelten Zustand ist das Freigabeelement 158 über den Verriegelungselementen 148 angeordnet, welche dadurch einen größeren Bewegungsraum aufweisen und die umlaufende Nut 122 der Werkzeugverbindungseinheit 104 verlassen können.

Im Bereich der Gehäuseschnittstelle 114 der Werkzeugverbindungseinheit 104 ist das Gehäuse 102, insbesondere der Hauptkörper 142 des Gehäuses 102, derart geformt, das im montierten Zustand die Gehäuseschnittstelle 114 nicht von dem Bohrwerkzeug 10 lösbar bzw. nicht spreizbar ist. Vorteilhaft kann dadurch sichergestellt werden, dass sich der Absaugadapter 100 im verriegelten Zustand nicht von dem Bohrwerkzeug 10 löst.

Die Verbindung des Gehäuses 102 des Absaugadapters 100 mit dem Bohrwerkzeug 10 erfolgt dabei mittels eines Aufschiebens des Gehäuses 102 über das Einsteckende 16 des Bohrwerkzeugs 10.

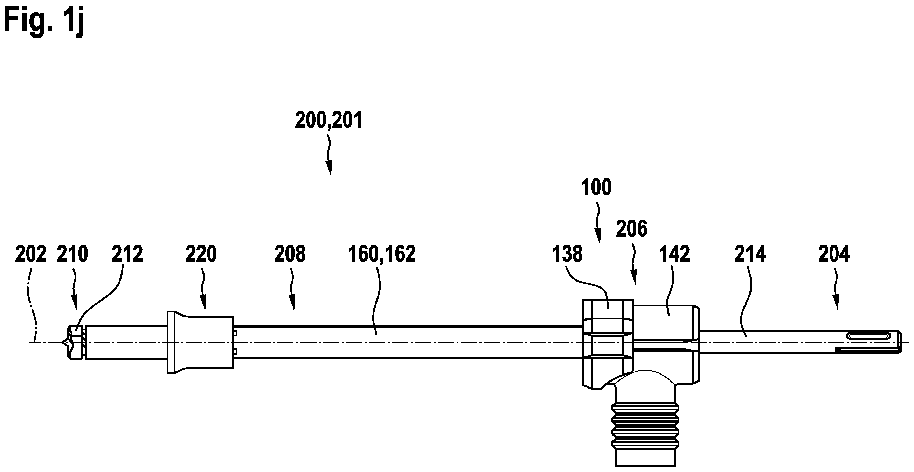

In Fig. 1j ist der Absaugadapter 100 im mit einem weiteren Bohrwerkzeug 200, insbesondere mit einem großen Bohrwerkzeug 201, verbundenen Zustand in einer Seitenansicht gezeigt.

Das Bohrwerkzeug 200 ist ebenfalls als ein Saugbohrer ausgebildet, und umfasst entlang seiner Längserstreckung 202 ein Einsteckende 204, ein Anschlussbereich 206, einen Transportbereich 208 und einen Bohrkopf 210.

Im Unterschied zu dem kleinen Bohrwerkzeug 11 weist der Transportbereich 208 des großen Bohrwerkzeugs 201 einen größeren Durchmesser als das Einsteckende 204 auf. Das Einsteckende 204 ist wie bereits zuvor beschrieben als ein SDS-plus Einsteckende ausgebildet.

Der Bohrkopf 210 weist einen Schneidkörper 212 in Form eines Vollhartmetallkopfes auf, der wie zuvor beschrieben mit einem Grundkörper 214 des Bohrwerkzeugs 200 beispielhaft verschweißt ist.

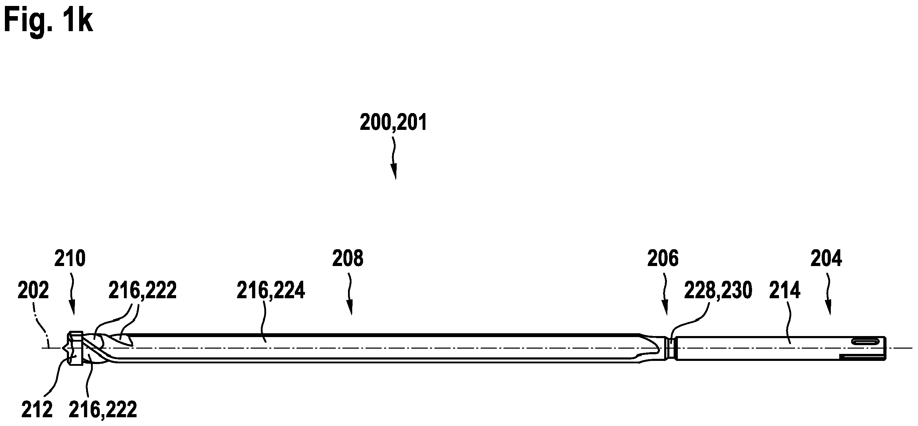

Das Bohrwerkzeug 200, insbesondere der Grundkörper 214 des Bohrwerkzeugs 200, weist im Transportbereich 208 exzentrische Nuten 216 (siehe Fig. 1k) auf, die durch ein zweites Adapterelement 160, insbesondere einem Hülsenelement 162, radial nach außen geschlossen sind. Im Gegensatz zu dem Abdeckelement 34 des kleinen Bohrwerkzeugs 11 weist das Hülsenelement 162 keinen Spalt 35 auf und ist somit in Umfangsrichtung geschlossen ausgebildet. Das Hülsenelement 162 ist drehfest mit dem Absaugadapter 100 verbunden, wobei das Bohrwerkzeug 200 im Betrieb innerhalb des Hülsenelements 162 rotiert. Das Hülsenelement 162 weist eine Wandstärke bzw. Dicke zwischen 0,5 mm und 1,0 mm auf. Zur stoffschlüssigen Verbindung des Hülsenelements 162 wird ein zweikomponentiger insbesondere dünnflüssiger Klebstoff auf Epoxidharzbasis verwendet. Zwischen dem Grundkörper 214 und dem Hülsenelement 162 werden radial in den Nuten 216 die Transportkanäle 218 des großen Bohrwerkzeugs 201 gebildet.

Auf dem Hülsenelement 162 sitzt eine Anbohrkappe 220 auf, die linear beweglich mit dem Hülsenelement 162 verbunden ist.

In Fig. 1k ist das Bohrwerkzeug 200 in einem nicht mit dem Absaugadapter 100 verbundenen Zustand gezeigt.

Der Grundkörper 214 des Bohrwerkzeugs 200 ist einstückig ausgebildet. In einem dem Bohrkopf 210 zugewandten Bereich weist der Grundkörper 214 beispielhaft vier konkave Nuten 222 auf, die sich spiralförmig um die Längsachse 202 erstrecken. Die konkave Nuten 222 sind dabei derart ausgebildet, dass sie sich zumindest um eine 1/8 Windung, vorzugsweise um zumindest eine ½ Windung, bevorzugt um zumindest eine ganze Windung, um die Längsachse 202 winden. Die konkaven Nuten 222 erstrecken sich beispielhaft im Wesentlichen gleichmäßig beabstandet zueinander. Die konkaven Nuten 222 weisen entlang der Längsachse 202 eine Länge auf, die zumindest einer Länge des Bohrkopfs 210 und weniger als der dreifachen Länge des Bohrkopfs 210 entspricht.

Zudem weist der Grundkörper 214 zwei im Wesentlichen flache Nuten 224 auf, die teilweise hinter den konkaven Nuten 222 angeordnet sind. Die flachen Nuten 224 sind auf gegenüberliegenden Seiten des Grundkörpers 214 angeordnet. Die konkaven Nuten 222 gehen in die flachen Nuten 224 über, sodass aus vier Nuten 216 zwei Nuten 216 gebildet werden. Die flachen Nuten 224 erstrecken sich geradlinig und im Wesentlichen parallel zu der Längsachse 202 des Bohrwerkzeugs 200. Somit sinkt die Steigung der Nuten 216 durch den Übergang auf die flachen Nuten 224 insbesondere auf null. Es wäre allerdings ebenso denkbar, dass die konkaven Nuten 222 sich nicht spiralförmig um die Längsachse 202 erstrecken und/oder die flache Nuten 224 sich spiralförmig um die Längsachse 202 erstrecken.

Zwischen dem Transportbereich 208 und dem Einsteckende 204 weist der Grundkörper 214 im Anschlussbereich 206 ein Anschlusselement 228 in Form einer außenliegenden umlaufenden Nut 230 auf. Das Anschlusselement 228 entspricht im Wesentlichen dem Anschlusselement 19 des Grundkörpers 32 des kleinen Bohrwerkzeugs 11. Vorteilhaft kann dadurch der Absaugadapter 100, insbesondere die Werkzeugverbindungseinheit 104 des Absaugadapters 100, sowohl mit dem kleinen Bohrwerkzeug 11 als auch mit dem großen Bohrwerkzeug 201 verbunden werden.

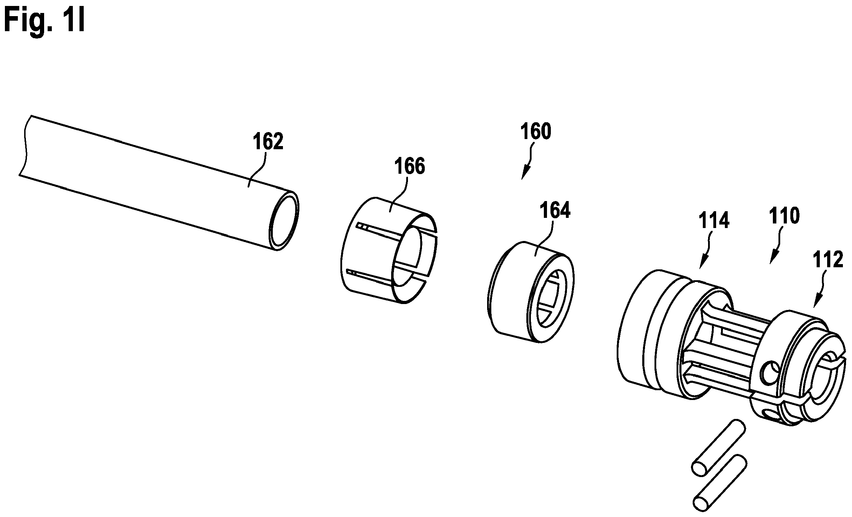

In Fig. 1l ist die Werkzeugverbindungseinheit 104 und das zweite Adapterelement 160 in einer perspektivischen Explosionsansicht gezeigt.

Das erste Adapterelement 126 und das zweite Adapterelement 160 weisen im Wesentlichen den gleichen Verbindungskörper 110 mit der gleichen Gehäuseschnittstelle 114 und der gleichen Werkzeugschnittstelle 112 auf.

Das zweite Adapterelement 160 wird analog zu dem ersten Adapterelement 126 über die Adapteröffnung 124 aufgenommen bzw. verbunden. Die Verbindung erfolgt dabei über ein Einsetzen eines Größenausgleichsrings 164, der an die Größe des Hülsenelements 162 angepasst ist. Der Größenausgleichring 164 weist einen Innendurchmesser auf, der im Wesentlichen einem Außendurchmesser des Hülsenelements 162 entspricht. Zudem weist der Größenausgleichring 164 einen Außendurchmesser auf, der im Wesentlichen einem Innendurchmesser des Verbindungskörpers 110 im Bereich der Adapteröffnung 124 entspricht.

Nach dem Einsetzen des Größenausgleichrings 164 wird das Hülsenelement 162 mittels eines Klebstoffes 166 mit diesem stoffschlüssig und drehfest verbunden.

Zur Verbindung mit dem Bohrwerkzeug 200 wird die Werkzeugverbindungseinheit 104 mit dem zweiten Adapterelement 160 voraus über das Einsteckende 204 auf den Grundkörper 214 des Bohrwerkzeugs 200 geschoben bis die Formschlusselemente der Werkzeugverbindungseinheit 104 in das Anschlusselement 228 des Grundkörpers 214 einrasten.

Im Anschluss kann wie zuvor beschrieben das Gehäuse 102 des Absaugadapters 100 mit der Werkzeugverbindungseinheit 104 verbunden werden. Somit ist sowohl das große Bohrwerkzeug 201 als auch das kleine Bohrwerkzeug 11 drehbeweglich mit dem Absaugadapter 100 verbunden.

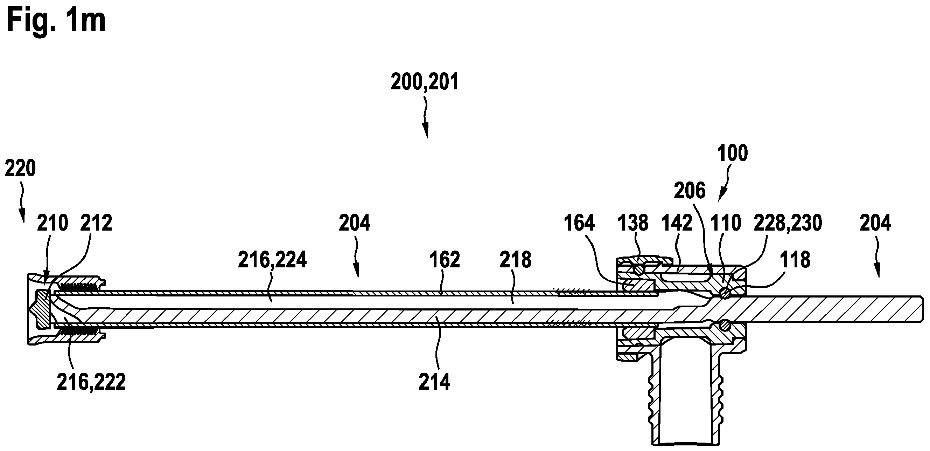

In Fig. 1m ist ein Längsschnitt durch den Absaugadapter 100 im mit dem großen Bohrwerkzeug 201 verbundenen Zustand gezeigt.

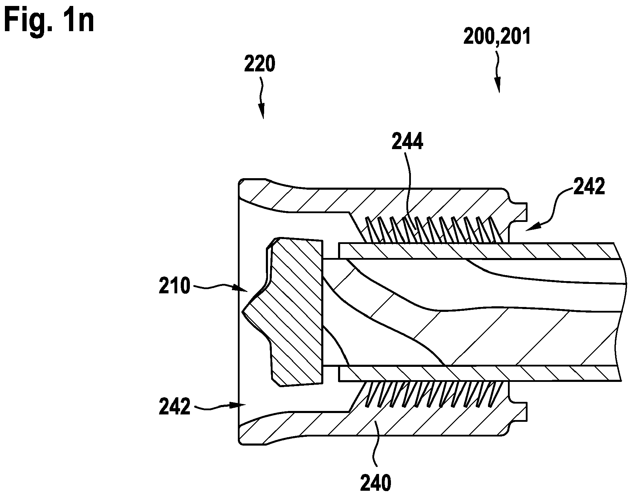

In Fig. 1n ist ein Längsschnitt durch den Bohrkopf 210 und die Anbohrkappe 220 gezeigt. Die Anbohrkappe 220 ist insbesondere dazu ausgebildet, beim Anbohren den Bereich um den Bohrkopf 210 abzuschließen, damit auch beim Anbohren effektiv der anfallende Bohrstaub und Bohrklein durch das Bohrwerkzeug 200 absaugbar ist.

Die Anbohrkappe 220 weist einen im Wesentlichen zylindrischen Grundkörper 240 mit zwei gegenüberliegenden Öffnungen 242 auf, durch die das Bohrwerkzeug 200 führbar sind. Die Anbohrkappe 220 weist an der Innenseite des Grundkörpers 240 Führungselemente 244 auf, die derart ausgebildet sind, dass die Anbohrkappe 220 im mit dem Bohrwerkzeug 200 verbundenen Zustand in die eine Richtung leichter zu bewegen ist, als in die andere Richtung. Insbesondere sind die Führungselemente 244 derart ausgebildet, dass die Bewegung nach vorne in Richtung des Bohrkopfs 210 vereinfacht und nach hinten erschwert wird.

Die Führungselemente 244 werden durch eine Vielzahl an parallel zueinander angeordneten Rippen ausgebildet, die sich schräg in Richtung des Bohrwerkzeugs 200 erstrecken. Der Winkel liegt der Rippen liegt dabei in einem Bereich zwischen 45° und 90° und die Rippen erstrecken sich in eine dem Bohrkopf 210 abgewandte Richtung. Die Anbohrkappe 220 ist beispielhaft einstückig und aus einem Kunststoff, insbesondere einem Hartplastik-Kunststoff, ausgebildet.

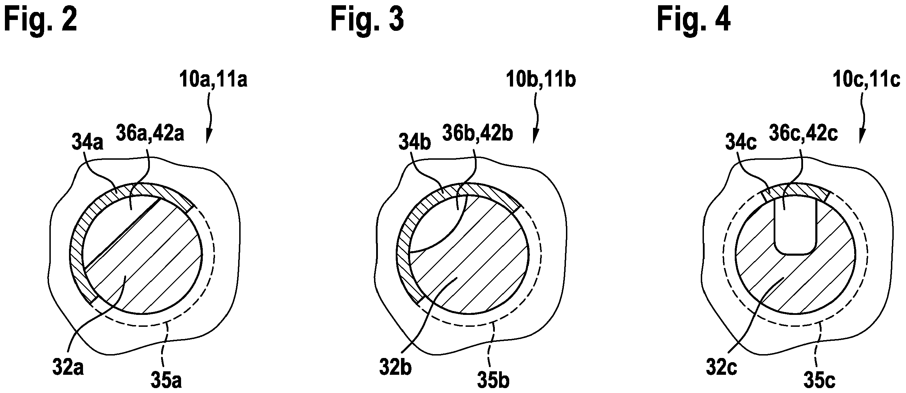

In Fig. 2 bis Fig. 17 sind alternative Ausführungsformen des Bohrwerkzeugs 10 in einem Querschnitt gezeigt. Bei den Bohrwerkzeugen handelt es sich dabei um kleine Bohrwerkzeuge 11, die sich in der Ausgestaltung des Grundkörpers 32 im Transportbereich 22 und in der Ausgestaltung des Abdeckelements 34 unterscheiden.

In Fig. 2 ist ein Querschnitt des Bohrwerkzeugs 10a im Transportbereich 22a gezeigt.

Der Grundkörper 32a weist eine einzelne Nut 42a auf, die beispielhaft flach ausgebildet ist. Die flache Nut 42a weist einen ebenen Nutengrund auf, welcher seitlich nicht von dem Grundkörper 32a begrenzt ist.

Das Abdeckelement 34a ist beispielhaft kreisbogenförmig ausgebildet und weist einen einzelnen Spalt 35a auf. Der Spalt 35a nimmt einen Winkelbereich von ca. 180° ein.

Das Abdeckelement 34a ist stoffschlüssig mit dem Grundkörper 32a verbunden und schließt den Transportkanal 36a ab.

In Fig. 3 ist ein Querschnitt des Bohrwerkzeugs 10b im Transportbereich 22b gezeigt.

Der Grundkörper 32b weist eine einzelne Nut 42b auf, die konkav ausgebildet ist. Die konkave Nut 42b weist einen gekrümmten Nutengrund auf, welcher seitlich von dem Grundkörper 32b begrenzt ist.

Das Abdeckelement 34b ist beispielhaft kreisbogenförmig ausgebildet und weist einen einzelnen Spalt 35b auf. Der Spalt 35b nimmt einen Winkelbereich von ca. 180° ein.

Das Abdeckelement 34b ist stoffschlüssig mit dem Grundkörper 32b verbunden und schließt den Transportkanal 36b ab.

In Fig. 4 ist ein Querschnitt des Bohrwerkzeugs 10c im Transportbereich 22c gezeigt.

Der Grundkörper 32c weist eine einzelne Nut 42c auf, die flach ausgebildet ist. Die flache Nut 42c weist einen ebenen Nutengrund auf, welcher seitlich von dem Grundkörper 32c begrenzt ist.

Das Abdeckelement 34c ist beispielhaft kreisbogenförmig ausgebildet und weist einen einzelnen Spalt 35c auf. Der Spalt 35c nimmt einen Winkelbereich von ca. 300° ein.

Das Abdeckelement 34c ist stoffschlüssig mit dem Grundkörper 32c verbunden und schließt den Transportkanal 36c ab.

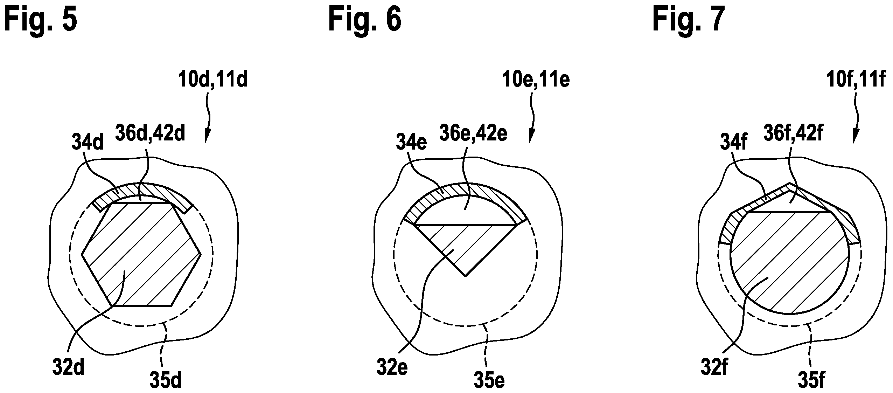

In Fig. 5 ist ein Querschnitt des Bohrwerkzeugs 10d im Transportbereich 22d gezeigt.

Der Grundkörper 32d weist einen sechseckigen Querschnitt auf. Der Grundkörper 32d weist eine einzelne Nut 42d auf, die flach ausgebildet ist. Die flache Nut 42d weist einen ebenen Nutengrund auf, welcher seitlich nicht von dem Grundkörper 32d begrenzt ist.

Das Abdeckelement 34d ist beispielhaft kreisbogenförmig ausgebildet und weist einen einzelnen Spalt 35d auf. Der Spalt 35d nimmt einen Winkelbereich von ca. 270° ein.

Das Abdeckelement 34d ist stoffschlüssig mit dem Grundkörper 32d im Bereich der Kanten verbunden und schließt den Transportkanal 36d ab.

In Fig. 6 ist ein Querschnitt des Bohrwerkzeugs 10e im Transportbereich 22e gezeigt.

Der Grundkörper 32e weist einen dreieckigen Querschnitt auf. Der Grundkörper 32e weist eine einzelne Nut 42e auf, die flach ausgebildet. Die flache Nut 42e weist einen ebenen Nutengrund auf, welcher seitlich nicht von dem Grundkörper 32e begrenzt ist.

Das Abdeckelement 34e ist beispielhaft kreisbogenförmig ausgebildet und weist einen einzelnen Spalt 35e auf. Der Spalt 35e nimmt einen Winkelbereich von ca. 240° ein.

Das Abdeckelement 34e ist stoffschlüssig mit dem Grundkörper 32e im Bereich der Kanten verbunden und schließt den Transportkanal 36e ab.

In Fig. 7 ist ein Querschnitt des Bohrwerkzeugs 10f im Transportbereich 22f gezeigt.

Der Grundkörper 32f weist eine einzelne Nut 42f auf, die flach ausgebildet ist. Die flache Nut 42f weist einen ebenen Nutengrund auf, welcher seitlich nicht von dem Grundkörper 32f begrenzt ist.

Das Abdeckelement 34f weist im Querschnitt betrachtet zwei balkenförmige Abschnitte, die dachartig aufeinander zulaufen und den Transportkanal 36f abdecken, und zwei kreisbogenförmigen Abschnitte, die an dem Grundkörper 32f anliegen, auf. Der Spalt 35f nimmt einen Winkelbereich von ca. 160° ein.

Das Abdeckelement 34f ist stoffschlüssig mit dem Grundkörper 32f im Bereich der kreisbogenförmigen Abschnitte verbunden und schließt den Transportkanal 36f ab.

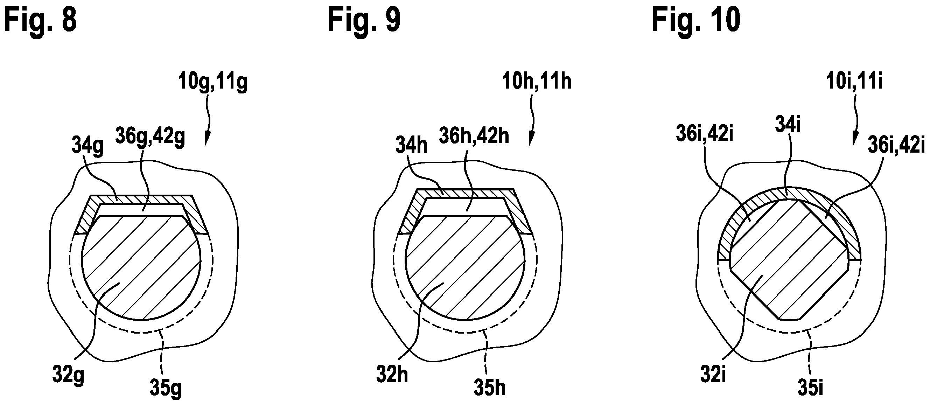

In Fig. 8 ist ein Querschnitt des Bohrwerkzeugs 10g im Transportbereich 22g gezeigt.

Der Grundkörper 32g weist eine einzelne Nut 42g auf, die flach ausgebildet ist. Die flache Nut 42g weist einen ebenen Nutengrund auf, welcher seitlich nicht von dem Grundkörper 32g begrenzt ist.

Das Abdeckelement 34g weist im Querschnitt betrachtet drei balkenförmige Abschnitte auf. Zwei gegenüberliegende balkenförmige Abschnitte liegen dabei am Grundkörper 32g an und begrenzen teilweise den Transportkanal 36g. Ein weiterer balkenförmiger Abschnitt zwischen diesen zwei verläuft im Wesentlichen parallel zu dem Nutengrund und schließt die Nut 42g radial ab. Der Spalt 35g nimmt einen Winkelbereich von ca. 250° ein.

Das Abdeckelement 34f ist stoffschlüssig mit dem Grundkörper 32g im Bereich der gegenüberliegenden balkenförmigen Abschnitte verbunden und schließt den Transportkanal 36g ab.

In Fig. 9 ist ein Querschnitt des Bohrwerkzeugs 10h im Transportbereich 22h gezeigt.

Da Abdeckelement 34h unterscheidet sich dabei von dem zuvor beschriebenen Abdeckelement 34g insbesondere durch einen Abstand des parallel zum Nutengrund verlaufenden balkenförmigen Abschnitts, welcher einen größeren Abstand aufweist und dadurch den Transportkanal 36h vergrößert.

In Fig. 10 ist ein Querschnitt des Bohrwerkzeugs 10i im Transportbereich 22i gezeigt.

Der Grundkörper 32i weist einen im Wesentlichen viereckigen Querschnitt auf. Der Grundkörper 32i weist zwei Nuten 42i auf, die flach ausgebildet sind. Die flachen Nuten 42i weisen einen ebenen Nutengrund auf, welcher seitlich nicht von dem Grundkörper 32i begrenzt ist.

Das Abdeckelement 34i ist kreisbogenförmig ausgebildet und deckt beide Nuten 42i ab. Der Spalt 35i nimmt einen Winkelbereich von ca. 180° ein.

Das Abdeckelement 34i ist stoffschlüssig mit dem Grundkörper 32i im Bereich der Kanten verbunden und schließt die Transportkanäle 36i ab.

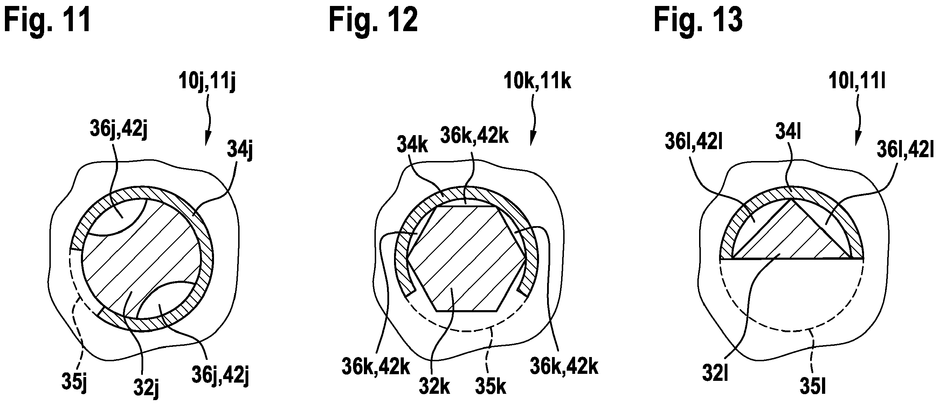

In Fig. 11 ist ein Querschnitt des Bohrwerkzeugs 10j im Transportbereich 22j gezeigt.

Der Grundkörper 32j weist zwei Nuten 42j auf, die konkav ausgebildet sind. Die konkaven Nuten 42j weisen einen gekrümmten Nutengrund auf, welcher seitlich von dem Grundkörper 32j begrenzt ist.

Das Abdeckelement 34j ist kreisbogenförmig ausgebildet und deckt beide Nuten 42j ab. Der Spalt 35j nimmt einen Winkelbereich von ca. 60° ein.

Das Abdeckelement 34j ist stoffschlüssig mit dem Grundkörper 32j verbunden und schließt die Transportkanäle 36j ab.

In Fig. 12 ist ein Querschnitt des Bohrwerkzeugs 10k im Transportbereich 22k gezeigt.

Der Grundkörper 32k weist einen im Wesentlichen sechseckigen Querschnitt auf. Der Grundkörper 32k weist drei Nuten 42k auf, die flach ausgebildet sind. Die flachen Nuten 42k weisen einen ebenen Nutengrund auf, welcher seitlich nicht von dem Grundkörper 32k begrenzt ist.

Das Abdeckelement 34k ist kreisbogenförmig ausgebildet und deckt alle Nuten 42k ab. Der Spalt 35k nimmt einen Winkelbereich von ca. 120° ein.

Das Abdeckelement 34k ist stoffschlüssig mit dem Grundkörper 32i im Bereich der Kanten verbunden und schließt die Transportkanäle 36k ab.

In Fig. 13 ist ein Querschnitt des Bohrwerkzeugs 10l im Transportbereich 22l gezeigt.

Der Grundkörper 32l weist einen im Wesentlichen dreieckigen Querschnitt auf. Der Grundkörper 32l weist zwei Nuten 42l auf, die flach ausgebildet sind. Die flachen Nuten 42l weisen einen ebenen Nutengrund auf, welcher seitlich nicht von dem Grundkörper 32l begrenzt ist.

Das Abdeckelement 34l ist kreisbogenförmig ausgebildet und deckt alle Nuten 42l ab. Der Spalt 35k nimmt einen Winkelbereich von ca. 180° ein.

Das Abdeckelement 34l ist stoffschlüssig mit dem Grundkörper 32l im Bereich aller Kanten verbunden und schließt die Transportkanäle 36l ab.

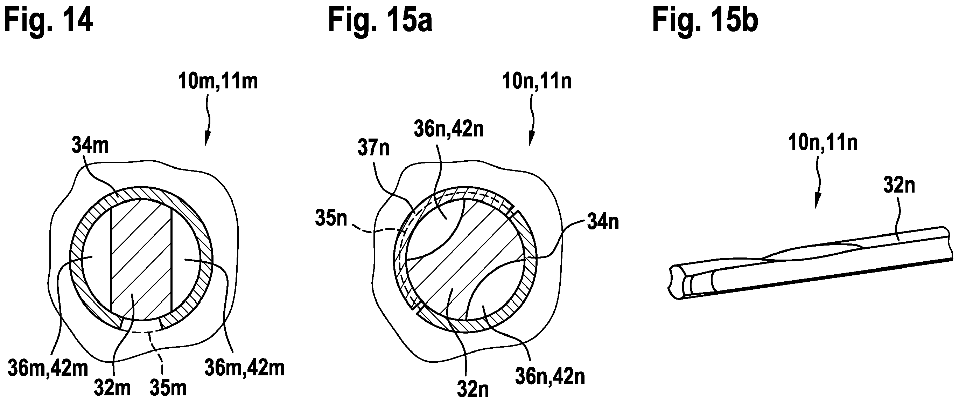

In Fig. 14 ist ein Querschnitt des Bohrwerkzeugs 10m im Transportbereich 22m gezeigt.

Der Grundkörper 32m weist zwei Nuten 42m auf, die flach ausgebildet sind. Die flachen Nuten 42m weisen einen ebenen Nutengrund auf, welcher seitlich nicht von dem Grundkörper 32m begrenzt ist.

Das Abdeckelement 34m ist kreisbogenförmig ausgebildet und deckt alle Nuten 42m ab. Das Bohrwerkzeug 10m weist ein einzelnes Abdeckelement 32m auf, das beide Nuten 42m abdeckt. Der Spalt 35m nimmt einen Winkelbereich von ca. 35° ein.

Das Abdeckelement 34m ist stoffschlüssig mit dem Grundkörper 32m verbunden und schließt die Transportkanäle 36m ab.

In Fig. 15a ist ein Querschnitt des Bohrwerkzeugs 10n im Transportbereich 22n gezeigt. In Fig. 15b ist der Grundkörper 32n des Bohrwerkzeugs 10n in einer perspektivischen Ansicht gezeigt.

Der Grundkörper 32n weist zwei Nuten 42n auf, die konkav ausgebildet sind. Die konkaven Nuten 42n weisen einen gekrümmten Nutengrund auf, welcher seitlich von dem Grundkörper 32n begrenzt ist.

Die zwei Nuten 42n sind unterschiedlich ausgebildet. Eine der Nuten 42n verläuft geradlinig und parallel zu der Längsachse des Bohrwerkzeugs 10n entlang des gesamten Transportbereichs 22n. Die anderer Nut 42n beginnt Im Bereich der Fügefläche für den Bohrkopf und erstreckt sich spiralförmig um die Längsachse bis sie in die geradlinige Nut 42n mündet.

Das Bohrwerkzeug 10n weist zwei Abdeckelemente 34n auf, wobei das weitere Abdeckelement 34n im Spalt des ersten Abdeckelements 34n angeordnet ist. Die Abdeckelemente 34n, 37n sind kreisbogenförmig und im Wesentlichen identisch zueinander ausgebildet. Der Spalt 35n nimmt einen Winkelbereich von größer als 180° ein, beispielsweise ca. 185°.

Die Abdeckelemente 34n sind stoffschlüssig mit dem Grundkörper 32n verbunden und schließt die Transportkanäle 36n ab.

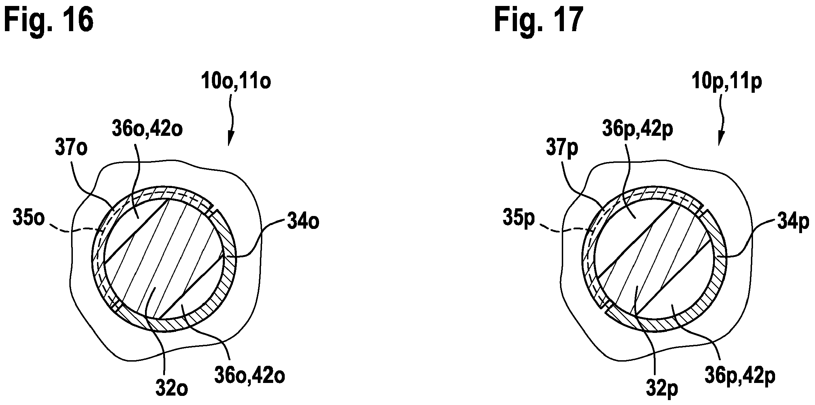

In Fig. 16 und in Fig. 17 sind unterschiedliche Ausführungsformen des Bohrwerkzeugs 10n gezeigt. Das Bohrwerkzeug 10o weist dabei im Unterschied zum Bohrwerkzeug 10n flache Nuten 42o auf. Das Bohrwerkzeug 10p weist im Unterschied zu dem Bohrwerkzeug 10o größeren Nuten 42p, und damit größere Transportkanäle 36p, auf.

## Patentansprüche

1. Absaugadapter für ein Bohrwerkzeug, mit einem Gehäuse (102), wobei das Gehäuse (102) eine Absaugvorrichtungsschnittstelle (106) zur lösbaren Verbindung einer Absaugvorrichtung (400) mit dem Absaugadapter (100) aufweist, und mit einer Werkzeugverbindungseinheit (104) zur axialen Fixierung des Absaugadapters (100) auf dem Bohrwerkzeug (10),
**dadurch gekennzeichnet, dass**
das Gehäuse (102) einen Verriegelungsmechanismus (108) aufweist, wobei die Werkzeugverbindungseinheit (104) über den Verriegelungsmechanismus (108) am Gehäuse (102) des Absaugadapters (100) verriegelbar ist.

2. Absaugadapter nach Anspruch 1, **dadurch gekennzeichnet, dass** der Verriegelungsmechanismus (108) ein Betätigungselement (138) aufweist, das über ein Rückstellelement (144) mit einer Kraft beaufschlagt ist.

3. Absaugadapter nach Anspruch 2, **dadurch gekennzeichnet, dass** das Betätigungselement (138) als eine Betätigungshülse ausgebildet ist.

4. Absaugadapter nach einem der Ansprüche 2 bis 3, **dadurch gekennzeichnet, dass** das Betätigungselement (138) relativ zu einem Hauptkörper (142) des Gehäuses (102) linear beweglich gelagert ist.

5. Absaugadapter nach einem der vorhergehenden Ansprüche, **dadurch gekennzeichnet, dass** die Absaugvorrichtungsschnittstelle (106) als ein Absaugstutzen (107) ausgebildet ist.

6. Absaugadapter nach Anspruch 5, **dadurch gekennzeichnet, dass** das Betätigungselement (138) derart angeordnet ist, dass die Absaugvorrichtungsschnittstelle (106), insbesondere der Absaugstutzen (107), zur Unterstützung der Betätigungsbewegung durch den Benutzer umgreifbar ausgebildet ist.

7. Absaugadapter nach einem der vorhergehenden Ansprüche, **dadurch gekennzeichnet, dass** der Verriegelungsmechanismus (108) zumindest ein, insbesondere zumindest zwei, vorzugsweise zumindest drei, Verriegelungselemente (148) aufweist.

8. Absaugadapter nach Anspruch 7, **dadurch gekennzeichnet, dass** die Verriegelungselemente (148) als Rastkugeln (150) ausgebildet sind.

9. Absaugadapter nach einem der vorhergehenden Ansprüche, **dadurch gekennzeichnet, dass** die Werkzeugverbindungseinheit (104) einen Verbindungskörper (110) mit einer Werkzeugschnittstelle (112) zur lösbaren Verbindung mit dem Bohrwerkzeug (10) und eine Gehäuseschnittstelle (114) zur lösbaren Verbindung mit dem Gehäuse (102) des Absaugadapters (100) aufweist.

10. Absaugadapter nach Anspruch 9, **dadurch gekennzeichnet, dass** der Verbindungskörper (110) im Bereich der Werkzeugschnittstelle (114) derart elastisch ausgebildet ist, dass die Werkzeugschnittstelle (112) zur Herstellung einer Verbindung mit dem Bohrwerkzeug (10) spreizbar ist.

11. Absaugadapter nach einem der vorhergehenden Ansprüche, **dadurch gekennzeichnet, dass** der Absaugadapter (100) zumindest ein Formschlusselement (118) zur axialen Fixierung aufweist, wobei das Formschlusselement (118) insbesondere aus einem metallischen Werkstoff ausgebildet ist.

12. Absaugadapter nach einem der Ansprüche 9 bis 11, **dadurch gekennzeichnet, dass** die Gehäuseschnittstelle (112) eine außenliegende umlaufende Nut (122) aufweist, die zu dem Verriegelungsmechanismus (108) des Gehäuses (102) korrespondiert.

13. Bohrwerkzeug mit einem Adapter (100) nach einem der vorhergehenden Ansprüche.

14. System aufweisend ein Bohrwerkzeug (10) mit einem Absaugadapter (100) nach Anspruch 1 und einer Handwerkzeugmaschine (300) mit einer Werkzeugaufnahme (302), wobei die Werkzeugaufnahme (302) einen Verriegelungsmechanismus aufweist, der dem Verriegelungsmechanismus (108) des Absaugadapters (100) im Wesentlichen entspricht.

15. System nach Anspruch 14, **dadurch gekennzeichnet, dass** der Verriegelungsmechanismus (108) des Absaugadapters (100) und der Verriegelungsmechanismus der Handwerkzeugmaschine (300) im Wesentlichen die gleiche Betätigungsrichtung aufweisen und die jeweilige Verriegelung über Rastkugeln (150) erfolgt.
